# EUROPÄISCHE PATENTSCHRIFT

(11) **EP 4 058 169 B1**
(45) Veröffentlichungstag und Bekanntmachung des Hinweises auf die Patenterteilung: **25.10.2023**
(21) Anmeldenummer: 20806989.8
(22) Anmeldetag: 11.11.2020
(51) Int. Cl.: B01D 17/00, B01D 17/12, B01D 24/00

(54) **VERBESSERTE FILTERANLAGE ZUM ENTFERNEN UND/ODER NEUTRALISIEREN VON UNGELÖSTEN ÖLEN, FETTEN UND SALZEN UND/ODER METALLABRIEBEN AUF UND IN WASSERHALTIGEN EMULSIONEN**
IMPROVED FILTER SYSTEM FOR REMOVING AND/OR NEUTRALIZING UNDISSOLVED OIL, GREASE, AND SALTS AND/OR ABRADED METAL PARTICLES ON AND IN EMULSIONS CONTAINING WATER
SYSTÈME DE FILTRE AMÉLIORÉ POUR ÉLIMINER ET/OU NEUTRALISER DES SELS, DE LA GRAISSE ET DE L'HUILE NON DISSOUS ET/OU DES PARTICULES MÉTALLIQUES ABRASÉES SUR ET DANS DES ÉMULSIONS CONTENANT DE L'EAU

(30) Priorität: 13.11.2019 DE 102019217503
(43) Veröffentlichungstag der Anmeldung: 21.09.2022
(73) Patentinhaber: NewFluid GmbH, 68165 Mannheim (DE)
(72) Erfinder: TILZ, Wolfgang, 68723 Schwetzingen (DE)
(74) Vertreter: Wohlfahrt, Jan Günther
(86) Internationale Anmeldenummer: PCT/EP2020/081806
(87) Internationale Veröffentlichungsnummer: WO 2021/094403

(56) Entgegenhaltungen:
- EP-A2- 0 001 101
- WO-A2-2014/198867
- DE-A1-102007 049 845
- DE-U1- 29 505 757

## Beschreibung

Die Erfindung betrifft eine Filteranlage zum Entfernen und/oder Neutralisieren von ungelösten Ölen, Fetten und Salzen, bevorzugt auch Schwebekörpern wie Metallabrieben, auf/in wasserhaltigen Emulsionen aus insbesondere Behältern und Wannen die zur Vorhaltung und Lagerung von Emulsionen verwendet werden.

Filteranlagen zum Entfernen von ungelösten Ölen und Fetten auf wasserhaltigen Emulsionen aus insbesondere Behältern und Wannen die zur Vorhaltung und Lagerung von Emulsionen verwendet werden sind in vielfältigen Ausführungen bekannt. Für Emulsions-Behälter und Wannen werden meist Oberflächen-Bandskimmer eingesetzt, die den aufschwimmenden Öl-Fettfilm entfernen. Dabei wird ein mechanisch/elektrisch angetriebenes Endlosband in die Wanne oder den Behälter eingetaucht, so dass durch die Aufwärtsbewegung das am Endlosband anhaftende Öl/Fett von der Oberfläche der Emulsion herausgefiltert wird. Das Öl/Fett haftet am Endlosband. Dieses wird dann über eine Umlenkrolle von der Aufwärtsbewegung auf eine Abwärtsbewegung umgelenkt und dann mittels Abstreifer vom Öl/Fettfilm befreit. Das Öl/Fett wird über eine horizontal abfallende Rinne in einem Behältnis (zum Beispiel ein Eimer) aufgefangen. Das so gereinigte Endlosband taucht dann wieder in die Wanne oder den Behälter, so dass durch die Ab-Aufwärtsbewegung des Endlosbands und über eine zweite Umlenkrolle das anhaftende Öl/Fett von der Oberfläche der Emulsion erneut herausgefiltert wird.

In der Praxis sind vielfältige Maschinen zur Bearbeitung von Werkstücken bekannt, die mittels Emulsion die Werkstücke und das Werkzeug kühlen und schmieren. Bei einer Computergesteuerten Dreh/Fräs-Maschine werden z. B. zur Reibungsverringerung und Gleitung der bewegten Werkzeug- und Werkstückhalter verschiedene Schmier- und Gleitmittel eingesetzt. Diese verhindern einen erhöhten Kraftaufwand bei der Bewegung und verhindern dabei ein Festsetzen und somit einen Defekt der Maschine.

In der Praxis sind solche Schmierstoffe bekannt. Sie werden als sogenannte Bettbahnöle bezeichnet und bestehen meist aus Paraffin und naphtenbasischen Kohlenwasserstoffe mit Additiven. (z.B. Hersteller Firma Scharr Handelsname: Bettbahnöl CGLP ISO-VG (68) und (220)). Diese Schmierstoffe werden während des Betriebes ständig zwischen die Gleitschienen der Werkzeug- und Werkstückhalter dosiert und bilden dabei einen dünnen Film und garantieren somit ein gutes Gleiten. Allerdings wird durch die Bewegung der Gleitschienen das Bettbahnöl an den Rändern der Gleitschienen herausgedrückt und muss somit nachdosiert werden. Zum Bearbeiten der Werkstücke mittels Werkzeuge wird zur Kühlung und Schmierung die Emulsion mittels Saug-Druckpumpe aus dem Behälter oder Wanne gefördert und mittels Düse auf die zu bearbeitende Stelle gespritzt. Die Kühl- und Schmierflüssigkeit, eine Emulsion, z.B. aus einem Gemisch aus Mineralöl, Emulgatoren, Stabilisatoren und Inhibitoren (zum Beispiel Hersteller Blaser, Handelsname: BLASOCUT^{®} BC 25 MD) wird mit 90 bis 98 % Wasser und 2 bis 10 % Blaser Mineralölgemisch vermischt. Beim Abfließen der Emulsion von dem Werkstück und dem Werkzeug wird das Bettbahnöl von den Rändern der Gleitschienen abgespült und in der Maschinenwanne und oder im Behälter aufgefangen, wo es sich auf der Oberfläche der Emulsion als Öl-Fettfilm ansammelt. Des Weiteren entstehen bei der Bearbeitung durch Drehen, Fräßen oder Bohren usw. des Werkstücks viele Metallspäne, die mit der Emulsion und dem Bettbahnöl in die Wanne oder in den Behälter eingespült werden. Diese Metallspäne werden gesammelt und manuell oder automatisch aus der Maschine entnommen. Die Wanne oder der Behälter sind meist unterteilt in verschiedene Zonen, wo eine Trennung der Späne und der Emulsion erfolgt. Meist werden hier Lochsiebe eingesetzt, so dass sichergestellt ist, dass die Pumpe zur Förderung der Emulsion keine Späne ansaugt und dadurch in Ihrer Förderleistung gehindert wird. Dabei ist nachteilig, dass das Bettbahnöl den Abfluss der Emulsion behindert, so dass bei hoher Emulsionsumwälzung ein Niveaugefälle in der Wanne oder im Behälter entsteht was zum einen ein Überlaufen vor dem Sieb zur Folge hat und zum anderen, dass der Pumpe nicht genügend Emulsion zufließt.

Aus der WO 2014/198867 A2 ist eine Filteranlage mit einem Emulgatorfilter, einem Injektor zur Gasanreicherung und einem Adhäsionsfilter bekannt, die zur Aufreinigung insbesondere kugelförmige Filterelemente verwendet.

Bei Inbetriebnahme dieser Filteranlage müssen alle drei Filterbehälter Vakuumdicht geschlossen werden. Die Emulsion wird dann mittels Vakuumpumpe über den Skimmer aus der Maschinenwanne/ Behälter abgesaugt. Bei Inbetriebnahme der Saug-Druck-Umwälzpumpe muss diese zusätzlich belüftet werden da Emulsion nicht in die Pumpenkammer einströmt.

Mittels mechanischer Niveauregulierung wird die Emulsion in eine Niveau-Kammer eingesaugt, die dann zur Ein-, Aus-, Um-Schaltung der Pumpen dient. Hierbei können Öle, Fette und Graphite zu Schaltspielstörungen führen.

Beim Absaugen der Emulsion mittels Saug-Druck-Umwälzpumpe aus dem Emulgatorfilter kann es zu störenden Verklumpungen und somit zu Niveau-Schwankungen in der Niveaukammer kommen.

Beim Aufbereiten von mit Graphit usw. belasteten Emulsionen kann es zu Verklebungen der Filterelemente kommen, die dann von Zeit zu Zeit aus den Filterbehältern entnommen werden müssen um sie mechanisch/chemisch zu reinigen. Da diese als Schüttung in den Filterbehältern liegen, müssen diese aufwendig einzeln entnommen werden.

Der Erfindung liegt das technische Problem zugrunde, eine Filteranlage bereitzustellen, die hinsichtlich Aufbau und Wirkungsweise besser als bekannte Verfahren, Vorrichtungen und Anlagen arbeitet und die genannten Probleme überwindet.

Erfindungsgemäß wird dieses Problem mit einer Filteranlage mit den Merkmalen des Anspruchs 1 gelöst.

Die vorliegende Erfindung basiert auf einer Filteranlage, wie sie in der WO 2014/198867 A2 beschrieben ist, bei der jedoch grundlegende zusätzliche hier offenbarte Merkmale und/oder Abwandlungen zu überraschenden Verbesserungen führen.

Die vorliegende Erfindung betrifft insbesondere eine Filteranlage zum Entfernen und/oder Neutralisieren von ungelösten Ölen und Fetten auf/in wasserhaltigen Emulsionen aus insbesondere Behältern und Wannen, die zur Vorhaltung und Lagerung von Emulsionen verwendet werden, die zur Kühlung und Schmierung von Werkstücken und Werkzeugen bei der Bearbeitung eingesetzt werden, mit wenigstens
- einer Vorrichtung zur Absaugung der Emulsion aus der Emulsions-Wanne/Behälter, bevorzugt mittels Skimmer,
- einer Leitung von der Vorrichtung zu einem Zulauf eines ersten Filterbehälters,
- einem, bevorzugt seitlich angeordneten Ablauf aus dem ersten Filterbehälter,
- einer mit dem Ablauf verbundene Pumpe,
- einem zweiten Filterbehälter mit einem Belüftungsventil,
- einem dritten Filterbehälter, der über eine Leitung mit dem zweiten Filterbehälter verbunden ist,
wobei die Filteranlage ein Dreiwegeventil aufweist, wobei der Zulauf des Dreiwegeventils mit der Pumpe verbunden ist, der erste Dreiwegeablauf mit dem ersten Filterbehälter verbunden ist und der zweite Dreiwegeablauf mit dem zweiten Filterbehälter verbunden ist.

Bevorzugt ist die Vorrichtung zur Absaugung der Emulsion aus der Emulsions-Wanne/Behälter ein Skimmer.

Bevorzugt enthalten der erste Filterbehälter, der zweite erste Filterbehälter und/oder der dritte Filterbehälter jeweils eine Mehrzahl kugelförmiger Filterelemente.

Bevorzugt ist der erste Filterbehälter ein Behälter für eine erste Filtereinheit, die Emulgatorfiltereinheit.

Bevorzugt ist der zweite Filterbehälter ein Behälter für eine zweite Filtereinheit, die Oxidationsfiltereinheit, auch Adhäsionsfiltereinheit genannt.

Bevorzugt ist der dritte Filterbehälter ein Behälter für eine dritte Filtereinheit, die Reaktionsfiltereinheit, auch Kapillarfiltereinheit genannt.

Bevorzugt weist die erste Filtereinheit eine Niveau-Regulierungs-Einheit auf.

Bevorzugt bilden der Skimmer, der erste Filterbehälter, der zweite Filterbehälter und der dritte Filterbehälter eine Einheit und sind in Reihe angeordnet, so dass besonders bevorzugt die Emulsion abgesaugt und dann durch die Filterelemente behandelt werden kann, insbesondere mechanisch, chemisch und biologisch behandelt werden kann.

In einer bevorzugten Ausführungsform weist der erste Filterbehälter, bevorzugt auch der zweite Filterbehälter und/oder der dritte Filterbehälter jeweils eine Vielzahl von kugelförmigen Filterelementen auf.

Das erfindungsgemäße der mit dem Ablauf aus dem ersten Filterbehälter verbundenen erste Pumpe, bevorzugt Umwälzpumpe nachgeschaltete Dreiwegeventil kann in vorteilhafter Weise beim Ansaugen der Emulsion, beispielsweise mittels einer Luftpumpe, so gestellt werden, dass nur der erste Filterbehälter und die vorgeschaltete Pumpe unter Vakuum gesetzt werden. Dadurch wird in vorteilhafter Weise das entstehende Vakuum im Volumen stark reduziert, da in den beiden nachgeschalteten Filterbehältern kein Vakuum benötigt wird. Auch wird die vorgeschaltete Pumpe, bevorzugt Umwälzpumpe, gleichzeitig mit dem Einsaugen der Emulsion aus der Maschinenwanne/dem Behälter mit Emulsion befüllt, so dass diese nicht mehr zusätzlich belüftet werden muss. Durch die Stellung des Dreiwegeventils in Richtung des ersten Filterbehälters wird die Emulsion im ersten Filterbehälter zirkuliert. Dabei können vorteilhafterweise Luftüberschüsse über den oberen Gasraum abgeführt werden. Bei einer stabilen Emulsion kann dann das Dreiwegeventil in Richtung des zweiten Behälters umgeschaltet werden, so dass die Emulsion dorthin zur weiteren Aufreinigung geleitet wird. Das Umschalten des Dreiwegeventils kann entweder nach einer bestimmten Zeit erfolgen oder bei Erreichen eines bestimmten Messwerts, beispielsweise durch die Messung der Veränderungen des Vakuums. Daher weist der erste Filterbehälter bevorzugt ein Vakuummeter auf.

In einer bevorzugten Ausführungsform weist der erste Filterbehälter eine Niveau-Regulierungs-Einheit auf, die ein senkrecht verlaufendes Rohr und ein am unteren offen Ende des Rohrs befestigten flexiblen Behälter aufweist, wobei sich im Behälter und im Rohr eine Flüssigkeit befindet.

Der flexible Behälter kann beispielsweise ein Beutel sein, der beispielsweise aus einer Folie gebildet wird, insbesondere einer Polyethylenfolie, beispielsweise aus HDPE.

Bevorzugt ist der flexible Behälter im Bodenbereich und unterhalb eines Auflagesiebbodens positioniert. Durch diese Niveauregulierung ist es im Vergleich zum Stand der Technik möglich, die Emulsionshöhe zu messen ohne dass die verschmutzte Emulsion in das Niveauregulierungsrohr eindringen muss, sondern es wird eine gesonderte Niveauregulierungsflüssigkeit verwendet. Diese kann vorteilhafterweise zur besseren Ablesbarkeit eingefärbt werden. Weiterhin wird dadurch eine Verschmutzung durch Ablagerungen im Niveauregulierungsrohr verhindert. Je höher der Emulsionsstand im ersten Filterbehälter ist, umso mehr drückt die Emulsion den flexiblen Behälter zusammen, so dass die darin befindliche Flüssigkeit in das Rohr gedrückt wird und im Rohr der Flüssigkeitsstand ansteigt, so dass der Emulsionsstand abgelesen werden kann. Der flexible Behälter, insbesondere Beutel, kann auch als Membranausgleichsbehälter bezeichnet werden.

In einer bevorzugten Ausführungsform ist das senkrecht verlaufende Rohr nach oben hin offen.

Ein nach oben hin offenes Rohr kann in vorteilhafter Weise gleichzeitig mit zur Entgasung der Emulsion im ersten Filterbehälter verwendet werden, insbesondere in Kombination mit einer Entgasungseinheit, beispielsweise einem Gasüberstromrohr.

In einer bevorzugten Ausführungsform weist der ersten Filterbehälter im oberen Bereich ein Gas-Überstromrohr auf, das an eine Pumpe angeschlossen ist, die mit dem zweiten Filterbehälter verbunden ist.

In dieser vorteilhaften Ausführungsform weist die Filteranlage also zwei Pumpen auf, zum einen die erste, dem Dreiwegeventil vorgeschaltete Pumpe und zum anderen die zweite, dem Gasüberdruckrohr zugeordnete Pumpe. Bevorzugt handelt es sich bei der ersten Pumpe um eine Umwälzpumpe, insbesondere Saug-Druck-Umwälzpumpe. Bevorzugt handelt es sich bei der zweiten Pumpe um eine Luftpumpe, insbesondere Saug-Druck-Luftpumpe.

In vorteilhafter Weise kann auf weitere Pumpen verzichtet werden, beispielsweise auf eine dritte Pumpe, wie sie im Stand der Technik als Luftpumpe zur Gasluftversorgung der Leitung zwischen dem ersten Filterbehälter und dem zweiten Filterbehälter zugeordnet ist.

Darüber hinaus kann die zweite Pumpe, insbesondere Luftpumpe, in vorteilhafter Weise dazu verwendet werden, Luft in den zweiten Filterbehälter, auch Oxidationsbehälter genannt, zu pumpen.

In einer bevorzugten Ausführungsform ist das senkrecht verlaufende Rohr nach oben hin offen und das Gas-Überstromrohr reicht mit seinem unteren Ende in das senkrecht verlaufende Rohr hinein, wobei das Gas-Überstromrohr einen kleineren Durchmesser hat als das senkrecht verlaufende Rohr, so dass Gas in die obere Öffnung des senkrecht verlaufende Rohrs eindringen kann.

Durch diesen Aufbau kann durch die Messung und Regulierung des Emulsionsstandes im ersten Filterbehälter keine Emulsion von oben in das senkrechte Rohr der Niveauregulierung eindringen, da das offene Rohrende über dem Emulsionsstand im Gasraum endet. Gleichzeitig kann jedoch Gas aus dem Gasraum in das Rohr eindringen und über das Gasüberstromrohr nach oben abgeleitet werden, insbesondere wenn der Emulsionsfüllstand so niedrig und der Gasraum damit so weit gefüllt ist, dass die Niveauregulierungsflüssigkeit so weit abgesunken ist, dass sich ein bevorzugter Schwimmerentlüfter öffnet und den Gasaustritt erlaubt. Steigt die Emulsionshöhe wieder, so steigt auch die Niveauregulierungsflüssigkeit durch das Gasüberstromrohr nach oben und verschließt somit wieder den Schwimmerentlüfter. Das Gas kann dann über die Luftpumpe in den zweiten Filterbehälter transportiert werden.

Ein weiterer Vorteil dieser bevorzugten Niveauregulierung des Emulsionsfüllstandes in den ersten Filterbehälter ist die Möglichkeit einer automatischen Gas/Luft-Regulierung. Die bevorzugte Luftpumpe kann nicht nur die überschüssigen Gase, sondern auch Frischluft in den zweiten Filterbehälter befördern.

In einer bevorzugten Ausführungsform weist der erste Filterbehälter ein Vakuummeter auf.

In einer bevorzugten Ausführungsform weist der zweite Filterbehälter ein Manometer auf.

In einer bevorzugten Ausführungsform sind das Dreiwegeventil, die erste Pumpe, die zweite Pumpe, das Vakuummeter und das Manometer mit einem Computer zur Steuerung der Filteranlage verbunden.

In vorteilhafter Weise kann die Filteranlage automatisiert über einen Computer oder durch einen Computer gesteuert werden, wenn der Computer die Werte des Vakuummeters und des Manometers misst und entsprechend der Messwerte das Dreiwegeventil, die erste Pumpe, bevorzugt Umwälzpumpe und die zweite Pumpe, bevorzugt Luftpumpe, steuert. Es zeigt sich, dass die Messung des Vakuums des Füllstands im ersten Filterbehälter und des Drucks im zweiten Filterbehälter für die Steuerung, das heißt Regelung der Zufuhrmenge an Emulsion und Schaltung des Dreiwegeventils ausreichend ist.

Es zeigte sich, dass der erfindungsgemäße Aufbau der Filteranlage in vorteilhafter Weise dazu führt, dass die Niveauunterschiede des Emulsionsstandes nur geringer ausfallen und Niveauänderungen langsamer erfolgen.

In einer bevorzugten Ausführungsform befindet sich der Ablauf des ersten Filterbehälters und/oder der Ablauf des zweiten Filterbehälters nicht am Boden, sondern an der Seitenwand, insbesondere im unteren Bereich der Seitenwand. Dadurch kann in vorteilhafter Weise eine Trombenbildung, auch als "Donut-Effekt" bezeichnet, verhindert werden, so dass die Emulsion gleichmäßiger bleibt.

Die Erfindung betrifft auch eine Filteranlage nach Anspruch 1 wobei der erste Filterbehälter und/oder der zweite Filterbehälter und/oder der dritte Filterbehälter jeweils einen herausnehmbaren Siebeinsatz aufweist, in dem sich eine Vielzahl von kugelförmigen Filterelementen befindet.

In einer bevorzugten Ausführungsform wird der Siebeinsatz aus einem seitlichen Siebgitter und einem Siebboden gebildet.

In einer bevorzugten Ausführungsform weist das seitliche Siebgitter des Siebeinsatzes eine Siebmaschenweite auf, die mindestens 10 % und höchstens 30 % kleiner ist als der Durchmesser der kugelförmigen Filterelemente, bevorzugt etwa 20 % kleiner ist als der Durchmesser der kugelförmigen Filterelemente.

Bevorzugt haben die kugelförmigen Filterelemente eine Dichte von > 1 kg/cm³.

Die bevorzugt etwas kleinere Siebmaschenweite in Bezug auf den Durchmesser der kugelförmigen Filterelemente führt in vorteilhafter Weise dazu, dass die Filterelemente seitlich etwas aus dem Siebeinsatz herausschauen. Dies hat den Vorteil, dass die Filterelemente in den Zwischenraum zwischen Filterbehälterinnenwand und Siebgitter hineinragen, so dass dieser Zwischenraum nicht zu einer kanalisierten Ablaufströmung der Emulsion an den Filterelementen vorbei führen kann. Trotzdem kann der Siebzylinder ohne größeren Kraftaufwand aus dem Filterbehälter bevorzugt nach oben hin hinausgezogen werden, um die Filterkugeln beispielsweise für eine Reinigung oder Erneuerung aus dem Filterbehälter zu entfernen.

Somit können durch die entsprechende Siebmaschenweite die Filterkugeln trotz des Siebeinsatzes an der Innenwand der Filterbehälter anliegen.

Bevorzugte Ausführungsformen dieses Erfindungsgegenstandes in Bezug auf die Gesamtfilteranlage ergeben sich aus der vorliegenden Beschreibung.

Dazu bilden bevorzugte Ausführungsformen das seitliche Siebgitter und der Siebboden einen Siebeinsatz, beispielsweise in Korbform. Gleichzeitig dient der Siebboden in vorteilhafter Weise als Abscheideeinheit wie im Stand der Technik beschrieben.

Die Erfindung betrifft auch eine Filteranlage nach Anspruch 1 wobei der ersten Filterbehälter eine Niveau-Regulierungs-Einheit aufweist, die ein senkrecht verlaufendes Rohr und ein am unteren offen Ende des Rohrs befestigten flexiblen Behälter aufweist, wobei sich im Behälter und im Rohr eine Flüssigkeit befindet.

Bevorzugte Ausführungsformen dieses Erfindungsgegenstandes in Bezug auf die Filteranlage ergeben sich aus der vorliegenden Beschreibung.

In einer bevorzugten Ausführungsform sind im ersten Filterbehälter schwimmende Filterelemente mit einer Dichte von kleiner als 1 kg/dm³ vorgesehen.

Es können aber auch Filterkugeln vorgesehen sein, die eine größere Dichte aufweisen und die somit in der Emulsion nicht schwimmen.

In einer bevorzugten Ausführungsform sind die Filterelemente aus einem diffusionsfähigen Kunststoff, insbesondere Polyamid, gebildet.

In einer bevorzugten Ausführungsform bestehen die Filterelemente aus Polyamid oder sie enthalten überwiegend Polyamid.

In einer bevorzugten Ausführungsform sind die Filterelemente aus Filterplatten, insbesondere mit Kapillarwirkung, ausgeführt.

Die Erfindung betrifft also insbesondere eine Filteranlage zum Entfernen und/oder Neutralisieren von ungelösten Ölen, Fetten und Salzen auf/in wasserhaltigen Emulsionen aus insbesondere Behältern und Wannen, die zur Vorhaltung und Lagerung von Emulsionen verwendet werden, die zur Kühlung und Schmierung von Werkstücken und Werkzeugen bei der Bearbeitung eingesetzt werden, mit wenigstens einer Vorrichtung als tangentialer Zulauf in einen Emulgatorfilter, einem Adhäsionsfilter mit automatischem Entlüfter und einem Öl-Sammelgefäß mit Ablauf, wobei die Filteranlage als Einheit die Emulsion die unlöslichen Öl-Fetttropfen mechanisch, physikalisch und biologisch behandelt, so dass dann die Öl-Fettschicht aus dem Filtersystem ausgeschieden wird. Bevorzugt weist die Filteranlage einen Kapillarfilter auf. Dieser ist bevorzugt dem Adhäsionsfilter nachgeschaltet.

In vorteilhafter Weise kann bei der erfindungsgemäßen Filteranlage auf einen Injektor verzichtet werden. Somit weist die Filteranlage in bevorzugter Ausführungsform keinen Injektor auf.

Bevorzugt weist die Filteranlage zum Absaugen der Emulsion und des Öl-Fettfilms aus der Emulsions-Wanne/Behälter einen Skimmer auf, wobei bevorzugt ein Skimmer Absaugungs-Anschluss von oben oder von unten, gegebenenfalls unter Verwendung einer Tauchpumpe vorgesehen ist.

Durch diese erfindungsgemäße Lösung wird eine Filteranlageneinheit vorgeschlagen, mit der Maschinen, Wannen und/oder Behälter mit der wasserhaltigen Emulsion vom Oberflächen-Öl-Fettfilm gereinigt werden können, so dass die nicht emulgierbare Öle/Fette aus der Wanne und oder den Behältern entfernt werden und somit die Bildung von Pilz- und Schleimbakterienbefall verhindert wird. Dabei wird durch Zugabe von Gasen/Luft und durch die Adhäsion und die kapillare Reaktion das nicht emulgierbare Öl zurückgehalten und dann aus der Filteranlage ausgeschieden.

Die mit Bettbahnöl beladene Emulsion kann mittels Unterdruck aus der Wanne oder dem Behälter über den Skimmer mittels Rohrverbindung in den Emulgatorfilter eingesaugt werden. Der Unterdruck entsteht bevorzugt dadurch, dass die dem Emulgatorfilter nachgeschaltete Saug- und Druckpumpe die Emulsion aus diesem abpumpt. Da es bei dem Unterdruck zur Entgasung der Emulsion kommt, wird mittels Gasniveauregelung sichergestellt, dass das überschüssige Gas aus dem Emulgatorfilter abgeführt wird.

Sind mehrere Maschinen an einer Filteranlage angeschlossen, kann die mit Bettbahnöl beladene Emulsion auch mittels Tauchpumpe aus der Wanne oder dem Behälter über den Skimmer mittels Rohrverbindung in eine Sammelleitung eingepumpt werden und dann in den Emulgatorfilter eingesaugt werden.

Sind mehrere Maschinen an einer Filteranlage angeschlossen, kann die gereinigte Emulsion beim Verlassen der Filteranlage in einer Verteilungsleitung und dann über die Maschinen-Anschlussleitung und über eine automatische Niveaudossierung mittels automatischem Ventil z.B. als Schwimmerventil zurück in die Wanne oder dem Behälter fließen. Dabei entsteht in der Wanne oder dem Behälter eine Querströmung, so dass die gereinigte Emulsion die mit Bettbahnöl beladene Emulsion zur Absaugung über den Skimmer bewegt.

Die Gasniveau-Regulierung stellt bevorzugt sicher, dass sich der Füllstand im Emulgatorfilter-Behälter immer im gleichen Niveau befindet, so dass der Rohrquerschnitt des tangentialen Zufluss bevorzugt mittig auf die Oberfläche trifft. Die mit Ö1/Fett beladene Emulsion wird durch die tangentiale Einströmung in Rotation um die Behälterachse gelenkt, so dass eine gleichmäßige Oberflächenströmung entsteht. Dabei können sich die leichteren Öl/Fettbestandteile (z.B. Bettbahnöl) von dem Emulsionsstrom lösen, so dass diese an der Oberfläche aufschwimmen. Filterelemente, die in ihrer Dichte leichter als die Dichte der Emulsion sind, schwimmen bevorzugt in der Oberfläche der Emulsion, so dass diese durch die Rotationsströmung mit an der Oberfläche zirkulieren. Durch die rotierende Strömung stoßen die Filterelemente zusammen und zerkleinern dabei den Öl-Fettfilm zu kleinen Mikrotropfen, die dann durch die Adhäsionskraft der Emulsion mitgeführt werden.

Die Ausführung der Filterelemente als runder Körper ist hierbei von Vorteil, da es bei Ecken und Kanten (Würfel, Quader, Prismen oder Hohlzylinder) unweigerlich zum Abrieb und zum Verkanten der Filterelemente kommt. Da aber eine geschlossene Kugel nicht den gewünschten Mischeffekt und Zerkleinerungseffekt hat, ist diese in ihrer Ausführung mittels Plättchen erstellt. Die Kugel ist vorteilhaft als einstückiges Spritzgussformteil hergestellt und besteht aus beabstandeten plattenförmigen Elementen, die als zwei Halbschalen zusammengesetzt sind und eine am Äquator um 90° versetzte Anordnung die Kreuzpunkte bilden und dort beim Spritzgießen miteinander verfließen und dabei zu einem einstückigen Element zusammengeformt werden. Zwischen den einzelnen Platten befinden sich Zwischenräume, die entlang der die Zwischenräume begrenzenden Wände große Einströmflächen bilden, so dass es an den Kanten der Blättchen zu Verwirbelungen kommt, die dann zum gewünschten Zerkleinerungseffekt des Öl-Fettfilms führen.

Die Emulsion fließt bevorzugt vertikal nach unten in den Emulgatorfilter-Behälterboden. Dabei umströmt die Emulsion die Filterelemente, die bevorzugt aus einem diffusionsfähigen Kunststoff, bevorzugt aus Polyamid, hergestellt sind. Hierbei entsteht eine bis zu 10 % Beladung der Filter durch die Porositätseigenschaft des Werkstoffs. Dabei diffundieren Flüssigkeiten, Salze und Gase in das Filtermaterial und sorgen somit für einen ständigen osmotischen Austausch zwischen der Emulsion und der Filterkugel. Dadurch siedeln sich bevorzugt anaerobe Bakterien auf der Oberfläche der Filterkugel an und werden dann durch den osmotischen Austausch ständig mit Energie versorgt und können so besser die überschüssigen Salze abbauen. Der so entstehende osmotische Druck kann sogar einen Bakterienrasen durchströmen, da es dabei zu hohen Druckdifferenzen kommen kann. Hierbei ist sichergestellt, dass durch diesen ständigen osmotischen Druckausgleich die Zwischenräume der Filterkugelplatten nicht verblocken.

Die so angereicherte und vorfiltrierte Emulsion wird bevorzugt durch eine Saug-Druckpumpe in den Adhäsionsfilter-Behälter gepumpt. Der Adhäsionsfilter und der Adhäsionsfilter-Behälter werden auch Oxidationsfilter und Oxidationssfilter-Behälter genannt. Dabei wird die Emulsion mit Gas (z.B. Luft) beladen, so dass dann eine schaumartige Emulsion im Kopfraum und im Gasemulsionsverteilerraum entsteht. Mittels Rieselelement wird dann bevorzugt die schaumartige Emulsion auf die darunter angeordnete Filterkugelschüttung verteilt, so dass sich beim vertikalen Abfließen der Emulsion diese mit Gas (Sauerstoff) anreichert. Hierbei werden durch das unterschiedliche Adhäsionverhalten der Emulsion und der Öle/Fette die Phasen getrennt, so dass sich aus den Ölen/Fetten die Gasblasen bilden, die dann auf den Polyamid Kugeln zusammenlaufen und durch die Schwerkraft durch den Siebboden und dann auf die Niveau-Oberfläche tropfen. Durch die unterschiedliche Dichte zwischen der Emulsion (etwa 0,98 kg/dm³) und der Öle/Fette (etwa 0,85 kg/dm³) schwimmen die leichteren Öle/Fette-Gasblasen als Schaum unterhalb des Siebbodens auf der Niveauoberfläche der Emulsion.

Die überschüssigen Gas und der Öl/Fettschaumanteile trennen sich bevorzugt unterhalb des Siebbodens von der Emulsion, so dass die angereicherte Emulsion am Boden des Adhäsionsfilters den Behälter verlässt. Das überschüssige, verbrauchte Gas strömt bevorzugt mit dem Öl/Fettschaum mittels Abluftverbindung in den automatischen Schwimmerableiter. Beim Überströmen der Gase aus dem Adhäsionsfilters in den Schwimmerableiter wird der sich auf der Niveauoberfläche ansammelnden Öl/Fettschaum durch das Platzen der Blasen aufgetrennt, so dass die überschüssigen Gase aus dem automatischen Schwimmerableiter abgeführt werden. Dabei bildet sich ein Ölteppich, der dann über die Ölabscheideverbindungsleitung in das Ölsammelgefäß einströmt. Durch die unterschiedliche Dichte zwischen der Emulsion und dem Öl entsteht eine Unter-Überströmung, so dass beim Einströmen der leichteren Öle/Fette die schwerere Emulsion aus dem Öl-Sammelgefäß in den automatischen Schwimmerableiter rückströmt und diese dann über den Niveauausgleich verlässt. Das mit Gas angereicherte Öl/Fett trennt sich im Kopfraum des Ölsammelgefäßes, so dass der Gasüberschuss über die Belüftung abgeführt wird. Die sich nach unten aufstauende Öl/Fettschicht wird bevorzugt mittels geeigneter Messtechnik (z.B. Detektor mit einem elektromagnetischen Wechselfeld zur Unterscheidung der dielektrischen Eigenschaften) von der Emulsion unterschieden, so dass ein manuelles oder automatisches Ausschleusen der Öle/Fette ermöglicht wird.

Die gasangereicherte Emulsion verlässt bevorzugt seitlich im Bodenbereich des Adhäsionsfilters den Behälter und strömt dann ohne Gasblasen von seitlich in den unteren Bereich in den Kapillarfilter. In dem Kapillarfilterbehälter sind die gleichen diffusionsfähigen Filterelemente, wie bereits in den ersten beiden Filtern beschrieben, eingesetzt. Hierbei strömt die angereicherte Emulsion entgegen der Schwerkraft über die Filterelemente, so dass es dabei zur kapillaren Rückhaltung der restlichen Öle/Fette zwischen den Hohlräumen der Filterplatten kommt. Die gereinigte Emulsion fließt dann im Kopfraum des Kapillarfilterbehälters aus diesem heraus, so dass mittels Rohr- oder Schlauchverbindung diese in die Wanne oder in Behälter zurückgeführt wird. Hierbei entsteht in dem Behältnis eine Querströmung, so dass die Emulsion erneut zum Kühlen und Schmieren des Werkstücks und Werkzeugs eingesetzt wird. Der Kapillarfilter und der Kapillarfilter-Behälter werden auch Reaktionsfilter und Reaktionsfilter-Behälter genannt.

In einer bevorzugten Ausführungsform kann der Eintritt als tangentialer Zulauf zum Emulgatorfilter und Austritt vom Kapillarfilter dann als Rücklauf in eine bestehende Rohrleitung einer z.B. zentralen Filteranlage ergänzend zwischengeschaltet werden.

In einer bevorzugten Ausführungsform ist zum Absaugen der Emulsion und des Öl-Fettfilms mittels Skimmer aus der Emulsions-Wanne/Behälter, ein Skimmer Absaugung-Anschluss von oben, gegebenenfalls unter Verwendung einer Tauchpumpe vorgesehen.

In einer bevorzugten Ausführungsform ist zum Absaugen der Emulsion und des Öl-Fettfilms mittels Skimmer aus der Emulsions-Wanne/Behälter, ein Skimmer Absaugung-Anschluss von unten vorgesehen ist.

In einer bevorzugten Ausführungsform ist der Skimmer so ausgebildet, dass sowohl die Emulsion als auch der Ö1-Fettfilm von der Emulsions-Oberfläche in den Skimmer eintreten und aus der Emulsions-Wanne/Behälter absaugt werden kann.

In einer bevorzugten Ausführungsform wird der aufschwimmende Öl/Fettfilm über den oberen Rand des Schwimmkörpers einsaugt und über den Spalt zwischen dem Zylinder und dem Schwimmkörper mit einer Absaugleistung von 1 bis 100 % bevorzugt 10 bis 90 % des Skimmer Zulaufs abgesaugt, so dass der Anteil des Öl-Fettfilms kleiner als 1/1, bevorzugt kleiner 1/20 der abgesaugten Flüssigkeitsmenge ist.

In einer bevorzugten Ausführungsform ist die wirksame Skimmer-Saughöhe abhängig von der Förderleistung der Emulsion und der Dichte des Öl-Fettfilms und der Abwärtsströmung im Skimmer, wobei die Abwärtsströmung > 0,1 cm/Sek aber < 20 cm/Sek., bevorzugt 1 cm/Sek. und bei einer wirksamen Skimmer-Saughöhe > 1 cm aber < 100 cm bevorzugt 10 cm ist.

In einer bevorzugten Ausführungsform wird die mit Öl-Fettfilm beladene Emulsion mittels Saug-Druckpumpe im Unterdruck über eine Rohr-Schlauchverbindung in den Emulgatorfilter eingesaugt.

In einer bevorzugten Ausführungsform werden durch den Unterdruck im Emulgatorfilter und in der Emulsion die überschüssigen Gase über den Gasraum und über die mechanische Niveauregelung und dann über die Automatische-Niveauregelung aus dem Emulgatorfilter abgeführt.

In einer bevorzugten Ausführungsform werden die an der Oberfläche des Emulsionsraums im Emulgatorfilter schwimmenden, vorzugsweise kugelförmigen Filterelemente durch den Tangential-Zulauf in Rotationsströmung um die mechanische Niveauregelung versetzt, wobei dabei die Filterelemente bewegt werden und der sich bildenden Öl-Fettfilm in der Rotationsströmung zur Filterelement-Kollision führt, so dass sich kleine Öl-Fetttropfen bilden und diese dann in der Abwärtsströmung mit der Emulsion mitgeführt werden.

In einer bevorzugten Ausführungsform sind die Filterelemente bevorzugt aus einem diffusionsfähigen Kunststoff (Polyamid) gebildet und hierbei bis zu 10 % an Flüssigkeiten, Salze und Gase in das Filterelement diffundieren und somit für einen ständigen osmotischen Austausch zwischen der Emulsion und dem Filterelement sorgen, so dass sich bevorzugt anaerobe Bakterien auf der Oberfläche des Filterelement ansiedeln, die dann vom osmotischen Austausch ständig mit Energie versorgt werden und dabei einen Teil der überschüssigen Salze abbauen.

In einer bevorzugten Ausführungsform ist das Filterelement mit Adhäsionswirkung bevorzugt in Kugelform und aus Filterplatten mit Kapillarwirkung ausgeführt, wobei der Werkstoff bevorzugt Polyamid ist, da sich durch den ständigen osmotischen Druckausgleich die Zwischenräume nicht verblocken.

In einer bevorzugten Ausführungsform fließt die Emulsion durch den Siebboden aus dem Emulgatorfilter und durch die Saug-Druckpumpe über den Injektor mit Gas-/Luftversorgung beladen und dann in den Adhäsionsfilter gepumpt wird, wobei dabei im Gasemulsionsverteilerraum eine schaumartige Emulsion entsteht, die mittels Rieselelement auf die darunter angeordnete Filterelemente verteilt und somit die Emulsion mit Gas angereichert wird.

In einer bevorzugten Ausführungsform trennen sich die überschüssigen Gase und der Öl/Fettschaum unterhalb des Siebbodens von der Emulsion, so dass die angereicherte Emulsion am Boden des Adhäsionsfilters den Behälter verlässt.

In einer bevorzugten Ausführungsform strömen die überschüssigen Gase mit dem Öl-Fettschaum über die Öl-Fett/Abluftverbindung in den automatischen Entlüfter, wobei sich dabei die Gase auf der Niveauoberfläche mit dem Öl-Fettschaum ansammeln und es dann zum Platzen der Blasen kommt, so dass die überschüssigen Gase aus dem automatischen Entlüfter abgeführt werden.

In einer bevorzugten Ausführungsform strömt die Öl-Fettschicht über die Öl-Abscheideverbindungsleitung in das Öl-Sammelgefäß ein, wobei durch die unterschiedliche Dichte zwischen der Emulsion und dem Öl/Fettschicht eine Unter- Überströmung entsteht, so dass beim Einströmen der leichteren Öl-/Fettschicht die schwerere Emulsion aus dem Öl-Sammelgefäß in den automatischen Entlüfter rückströmt und diese dann über den Niveauausgleich verlässt.

In einer bevorzugten Ausführungsform trennt sich die mit Gasen angereicherte Öl-/Fettschicht im Kopfraum des Öl-Sammelgefäß, so dass der Gasüberschuss über die Belüftung abgeführt wird.

In einer bevorzugten Ausführungsform wird die nach unten aufstauende Öl-Fettschicht mittels Detektor von der Emulsion unterschieden und ein manuelles oder automatisches Ausschleusen der Öl-Fettschicht kann eingeleitet werden.

In einer bevorzugten Ausführungsform verlässt die gasangereicherte Emulsion den Adhäsionsfilter am Boden.

In einer bevorzugten Ausführungsform verlässt die gasangereicherte Emulsion den Adhäsionsfilter seitlich im Bodenbereich und strömt ohne Gasblasen von unten in den Kapillarfilter entgegen der Schwerkraft über die Filterelemente, so dass es dabei zur kapillaren Rückhaltung der restlichen Öle/Fette zwischen den Hohlräumen der Filterplatten kommen kann. Die gereinigte Emulsion fließt dann im Kopfraum des Kapillarfilters aus der Filteranlage in den Rücklauf.

In einer bevorzugten Ausführungsform werden der Reinigungseffekt der Emulsion von dem Öl-Fettfilm in der Filteranlage anhand der Sauerstoff- und der Leitwertmessung überwacht und kontrolliert, so dass die Leitwert-Sonde (LS) und die Sauerstoff-Sonde (SS) als Regelgröße der Filteranlage und zur Qualitäts-Beurteilung der Emulsion verwendet werden kann.

Bevorzugt ist eine erfindungsgemäße Filteranlage, wobei die Filteranlage zum Absaugen der Emulsion und des Öl-Fettfilms aus der Emulsions-WanneBehälter einen Skimmer aufweist, wobei bevorzugt ein Skimmer Absaugungs-Anschluss von oben oder von unten, gegebenenfalls unter Verwendung einer Tauchpumpe vorgesehen ist.

Bevorzugt ist eine erfindungsgemäße Filteranlage, wobei der Skimmer so ausgebildet ist, dass sowohl die Emulsion als auch der Öl-Fettfilm von der Emulsions-Oberfläche in den Skimmer eintreten und aus der Emulsions-WanneBehälter absaugt werden kann.

Bevorzugt ist eine erfindungsgemäße Filteranlage, wobei durch den Unterdruck im Emulgatorfilter und in der Emulsion die überschüssigen Gase über den Gasraum und über die mechanische Niveauregelung und dann über die automatische Niveauregelung aus dem Emulgatorfilter abgeführt werden.

Bevorzugt ist eine erfindungsgemäße Filteranlage, wobei im Emulgatorfilter schwimmende Filterelemente mit einer Dichte von kleiner als 1 kg/dm³ vorgesehen sind.

Bevorzugt ist eine erfindungsgemäße Filteranlage, wobei die Filterelemente des Emulgatorfilters, des Adhäsionsfilters und/oder des Kapillarfilters aus einem diffusionsfähigen Kunststoff gebildet sind. Bevorzugt ist eine erfindungsgemäße Filteranlage, wobei die Filterelemente des Emulgatorfilters aus einem diffusionsfähigen Kunststoff gebildet sind. Bevorzugt ist eine erfindungsgemäße Filteranlage, wobei bis zu 10 % an Flüssigkeiten, Salzen und Gasen in ein Filterelement diffundieren und somit für einen ständigen osmotischen Austausch zwischen der Emulsion und dem Filterelement sorgen, so dass sich bevorzugt anaerobe Bakterien auf der Oberfläche des Filterelement ansiedeln, die dann vom osmotischen Austausch ständig mit Energie versorgt werden und dabei einen Teil der überschüssigen Salze abbauen.

Bevorzugt ist eine erfindungsgemäße Filteranlage, wobei die Filterelemente aus Polyamid bestehen oder überwiegend Polyamid enthalten.

Bevorzugt ist eine erfindungsgemäße Filteranlage, wobei die Filterelemente kugelförmig sind. Bevorzugt ist eine erfindungsgemäße Filteranlage, wobei die Filterelemente aus Filterplatten mit Kapillarwirkung ausgeführt sind.

Bevorzugt ist eine erfindungsgemäße Filteranlage, wobei das Basismaterial für die Kunststoffplatten Polyamid ist. Bevorzugt ist eine erfindungsgemäße Filteranlage, wobei das Filterelement kugelförmig ist.

Bevorzugt ist eine erfindungsgemäße Filteranlage, wobei die Filteranlage alternativ oder auch zum Entfernen von Schwebeteilchen, insbesondere Metallabrieben verwendet wird. Es zeigte sich, dass die erfindungsgemäße Filteranalage überraschend auch zu einer Reduktion von Metallabrieben in der Emulsion führt.

Die Offenbarung betrifft auch ein Verfahren zum Entfernen und/oder Neutralisieren von ungelösten Ölen, Fetten und Salzen auf/in wasserhaltigen Emulsionen aus insbesondere Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei in dem Verfahren eine erfindungsgemäße Filteranlage eingesetzt wird.

Es zeigte sich überraschender Weise, dass sich die in der DE 10 2009 043 110 A1 beschriebenen Filterelemente nicht nur zur Reinigung von Teichanlagen und Aquarien eignen, sondern auch zum Entfernen und/oder Neutralisieren von ungelösten Ölen, Fetten und Salzen auf/in wasserhaltigen Emulsionen aus insbesondere Behältern und Wannen, die zur Vorhaltung und Lagerung von Emulsionen verwendet werden, die zur Kühlung und Schmierung von Werkstücken und Werkzeugen bei der Bearbeitung eingesetzt werden. Diese Filterelemente können daher auch bevorzugt in der erfindungsgemäßen Filteranlage eingesetzt werden, sowohl im Emulgatorfilter als auch im Adhäsionsfilter als auch im Kapillarfilter. Die Beschreibung der DE 10 2009 043 110 A1 ist somit Bestandteil der vorliegenden Anmeldung.

Bevorzugt ist dabei ein Filterelement, bestehend aus zu einem Körper zusammengefassten, nebeneinanderliegenden Kunststoffplatten, wobei als Basismaterial für die Kunststoffplatten ein Kunststoff mit einer Wasseraufnahmefähigkeit von größer 1 % verwendet wird. Bevorzugt ist das Basismaterial Polyamid. Bevorzugt ist das Polyamid PA 6, insbesondere PA 6 E.

Bevorzugt ist das Basismaterial ein Polyamid mit einer Dichte von größer 1 kg/dm³. Alternativ ist das Basismaterial ein Polyamid mit einer Dichte kleiner 1 kg/dm³. Durch die Dichte kann in vorteilhafter Weise beeinflusst werden ob die Filterelemente auf der Emulsion schwimmen oder in der Emulsion untergehen.

Bevorzugt ist das Filterelement als einstückiges, ballartiges also kugelförmiges Spritzgussformteil ausgebildet.

Bevorzugt wird das Filterelement aus wenigstens zwei Spritzgussformteilen, die lösbar mit einander verbunden werden können, gebildet.

In einer Ausführungsform können dem Basismaterial Zusatzstoffe, wie z. B. Glaskugeln, Luft, Gas oder Fasern, vor dem Spritzen beigemischt werden.

Bevorzugt ist die Filteranlage über einen Zulauf und einen Ablauf mit dem Behälter oder der Wanne verbunden.

Die Offenbarung betrifft auch ein Verfahren zum Entfernen von Metallabrieben aus wasserhaltigen Emulsionen aus insbesondere Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei ein Öl-Fettfilm und Teile der Emulsion durch eine erfindungsgemäße Filteranlage gefiltert werden.

Weitere bevorzugte Ausführungsformen ergeben sich aus den Unteransprüchen.

Im Folgenden wird die Erfindung anhand der in den Zeichnungen dargestellten Ausführungsbeispielen und einer beispielhaften Anwendung weiter erläutert und beschrieben, ohne dass diese Beispiele einschränkend zu verstehen wären.
- Fig. 1: zeigt eine schematische Darstellung einer Filteranlage aus dem Stand der Technik.
- Fig. 2: zeigt eine schematische Darstellung der erfindungsgemäßen Rotationszirkulation der Filterkugeln im Emulgatorfilter.
- Fig. 3: zeigt eine schematische Darstellung der erfindungsgemäßen Kollision der Filterkugeln in der Rotationszirkulation die im Emulgatorfilter zur Öl-Fettbehandlung dient.
- Fig. 4: zeigt eine räumliche Darstellung des erfindungsgemäßen Filterelements als Filterkugeln.
- Fig. 5: zeigt eine schematische Darstellung einer erfindungsgemäßen Filteranlage.
- Fig. 6: zeigt einen vergrößerten Ausschnitt der erfindungsgemäßen automatischen Gas/Luftregelung der Filteranlage aus Figur 5.
- Fig. 7: zeigt einen vergrößerten Ausschnitt der erfindungsgemäßen Niveauregulierungseinheit der Filteranlage aus Figur 5.
- Fig. 8: zeigt eine Querschnittsdarstellung des bevorzugten Aufbaus eines Siebeinsatzes mit Filterelementen.
- Fig. 9: zeigt eine Filteranlage zum Aufbereiten von Emulsionen aus mehreren Bearbeitungsmaschinen.

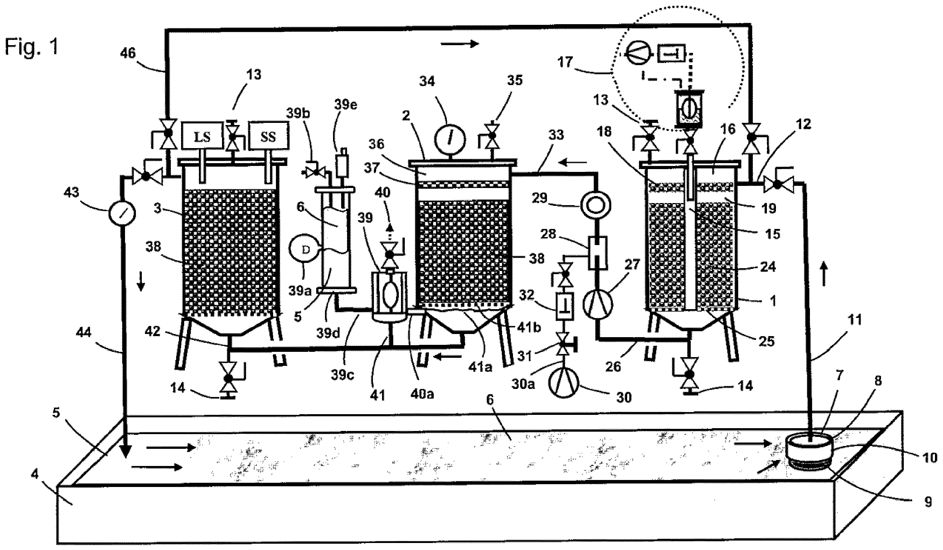

Eine Ausführungsform einer Filteranlage aus dem Stand der Technik ist als Ganzes schematisch in Fig. 1 dargestellt.

Eine solche Filteranlage wird in der WO 2014/198867 A2 beschrieben, deren Inhalt in die vorliegende Anmeldung mit einbezogen wird und auf deren Offenbarung vollständig Bezug genommen wird.

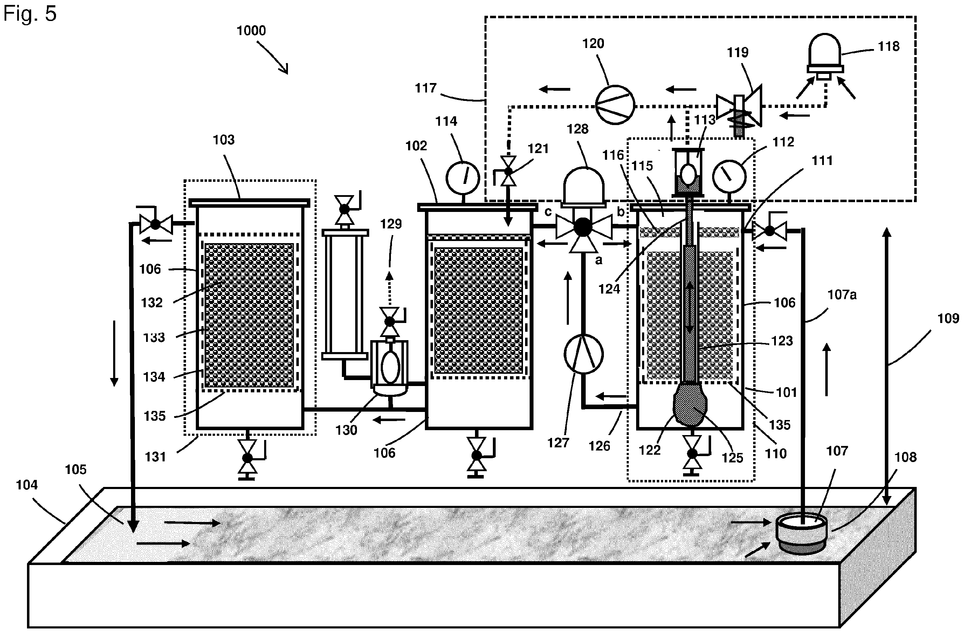

Anhand der Filteranlage aus Figur 1 wird das Grundprinzip der Funktionsweise erläutert. In Bezug auf die Figur 5 werden dann die erfindungsgemäßen Verbesserungen dargestellt.

Die Anlage ist vorzugsweise insgesamt dazugehörig zu einer Zerspannungsanlage und deren Vorratswanne und/oder Behälter in der die Emulsion vorgehalten wird. Die Zu- und Ablaufleitung zu der Emulsionswanne und/oder Behälter zu der zu reinigenden Emulsion sind dazugehörig.

Die wesentlichen Komponenten der Filteranlage sind zum einen die Absaugung der Emulsion 5 im Zusammenspiel mit dem anteiligen Öl-Fettfilm 6 mittels Skimmer 7 als Skimmer Absaugung-Anschluss von oben oder bei mehreren Maschinen mit Unterstützung einer Tauchpumpe im Skimmer und nachgeschalteter Sammelleitung oder als Skimmer Absaugung-Anschluss von unten in Abhängigkeit von Art und Ausführung der Emulsions-Wanne/Behälter 4, des Emulgatorfilters 1, des Adhäsionsfilters 2 sowie des Kapillarfilters 3. Die Funktionsweise und der Aufbau der einzelnen Komponenten werden nachfolgend beschrieben.

Die zu reinigende wasserhaltige Emulsion 5, die zur Kühlung und Schmierung von Werkstücken und Werkzeugen bei der Bearbeitung von Werkstücken eingesetzt wird, wird mittels Skimmer 7 und über den Skimmerablauf 11 und dann mittels Rohr- oder Schlauchleitung und dann als Tangentialzulauf 12 in den Emulgatorfilter 1 zur Aufbereitung eingeleitet.

Der Skimmer 7 saugt gleichzeitig die Emulsion 5 und den Öl-Fettfilm 6 von der Emulsionsoberfläche in die Emulsions-Wanne/Behälter 4 ab. Der aufschwimmende Öl/Fettfilm 6 wird über den Rand des Schwimmkörpers 10 einsaugt. Der Schwimmkörper 10 wird von Gasen 30a als Gaspolster an der Emulsions-Oberfläche getragen, dabei wird dieser durch einen feststehenden Zylinder, der in den Schwimmkörper 10 hineinragt, in Position gehalten. Zwischen dem Zylinder und dem Schwimmkörper besteht ein Spalt, der in seiner Breite zur Absaugleistung von 1 bis 100 %, bevorzugt 90 % des Emulsionszufluss von unterhalb der Emulsionsoberfläche als Skimmerzulauf unten 9 oder oben 8 abgesaugt wird. Dieser Effekt stellt sicher, dass der Emulsion/Öl-Fettfilm 6-Anteil < 1/1, bevorzugt < 1/20 der abgesaugten Flüssigkeitsmenge ist.

Die wirksame Skimmer-Saughöhe ist abhängig von der Förderleistung der Emulsion 5 und der Dichte des Öl-Fettfilms 6, und der Abwärtsströmung im Skimmer 7. Diese bewegt sich bei einer Abwärtsströmung von > 0,1 cm/Sek., aber < 20 cm/Sek., bevorzugt 1 cm /Sek bei einer wirksamen Skimmer Saughöhe von > 1 cm und < 100 cm, bevorzugt 10 cm.

Die mit Öl-Fettfilm 6 beladene Emulsion 5 wird mittels Unterdruck aus der Emulsions-WanneBehälter 4 über den Skimmer 7 mittels Rohr-Schlauchverbindung in den Emulgatorfilter 1 eingesaugt. Dabei entsteht beim Abpumpen mittels Saug-Druckpumpe 27 ein Unterdruck im Emulgatorfilter 1 und in der Emulsion 5. Dieser wird gleichzeitig zur Entgasung der Emulsion 5 verwendet, um dann das überschüssige Gas mittels automatischer Niveauregelung 17 aus dem Emulgatorfilter 1 abzuführen.

Die mechanische Niveauregulierung 15 ist ein im Achsenzentrum befindlicher Rohrzylinder, der beginnend unterhalb des Behälterdeckel vertikal nach unten in den Emulgatorfilter 1 führt, so dass die Rotationsströmung 20 um diesen erfolgt, und es zu keinem Strömungsabriss im Achsenzentrum kommt und sich hier ein Öl-Fettfilm 6 aufbaut.

Zur Sicherstellung der Niveauoberfläche der in der Rotationsströmung 20 schwimmenden Filterelemente < 1 kg/dm³ 18, werden im Gasraum des Emulgatorfilters 1 die überschüssigen Gase unterhalb des Deckels von oben in den zentrisch angeordneten Rohrzylinder, der im gasdurchlässigen Abstand am Deckel gehaltert ist, abgeführt. Ein zweiter kleinerer Rohrzylinder, der im Deckel befestigt und abgedichtet ist, ragt bis auf die Niveauoberfläche der Emulsion, so dass die überschüssigen Gase 30a beim Ausdehnen des Gasraums 16 so lange von unten in den kleineren Rohrzylinder einströmen, bis durch den Niveauanstieg das Rohr von der Emulsion 5 verschlossen wird.

Sind die überschüssigen Gase 30a aus dem Emulgatorfilter 1 und aus dem Gasraum 16 abgeführt, strömt von unten aus den Filterelementen > 1 kg/dm³ 24 eine Öl-Fettfilm 6 freie Emulsion 5 in den Rohrzylinder, dieser wird dann in der automatischen Niveauregulierung detektiert und zur Schaltung dieser verwendet.

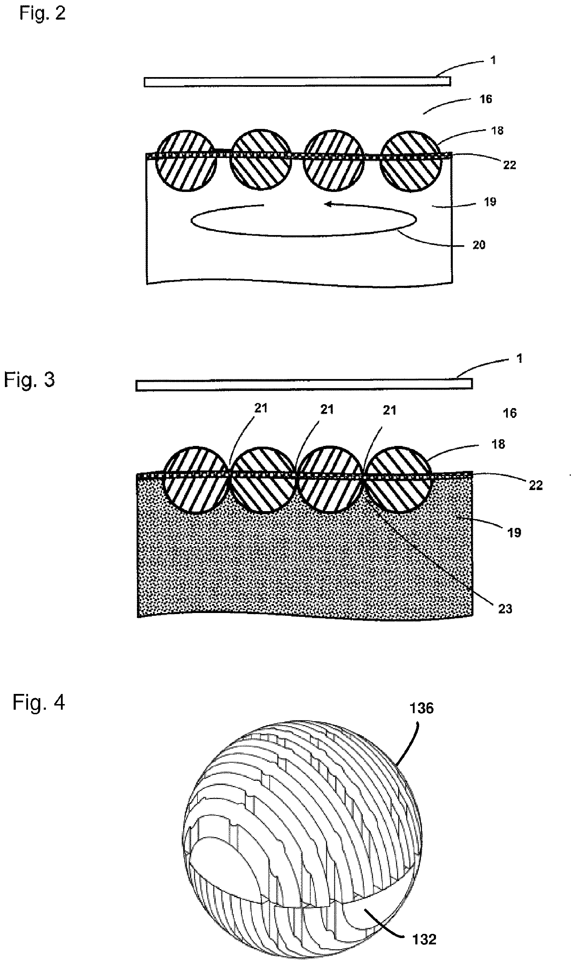

An der Oberfläche des Emulsionsraums 19 im Emulgatorfilter 1 schwimmen Filterelemente < 1 kg/dm³ 18 bevorzugt in Kugelform, die durch den Tangential-Zulauf 12 in Rotationsströmung 20, um die mechanische Niveauregelung 15 versetzt werden. Dabei bewegen die Filterelemente < 1 kg/dm³ 18 den sich bildenden Öl-Fettfilm 6 wie in Fig. 2 mit. In Rotationsströmung 20 führt das zur Filterelement-Kollision 21, die dazu führt, dass sich kleine Öl-Fetttropfen bilden, wie in Fig. 3 gezeigt, die dann in der Abwärtsströmung mit der Emulsion 5 mitgeführt werden.

Die Emulsion 5 umströmt dabei die Filterelemente > 1 kg/dm³ 24 aus einem bevorzugten diffusionsfähigen Kunststoff (Polyamid). Hierbei diffundieren bis zu 10 % an Flüssigkeiten, Salze und Gase 30a in das Filterelement 38 und sorgen somit für einen ständigen osmotischen Austausch zwischen der Emulsion und dem Filterelement 38. Anaerobe Bakterien siedeln sich bevorzugt auf der Oberfläche des Filterelement 38 an und werden vom osmotischen Austausch ständig mit Energie versorgt und bauen dabei einen Teil der überschüssigen Salze ab.

Das Filterelement 38 ist bevorzugt in Kugelform ausgeführt da die Umströmung einer Kugelschüttung für eine optimale Widerstandsverteilung garantiert. Der osmotische Druck der durch den bevorzugten Werkstoff (Polyamid) entsteht, kann sogar einen Bakterienrasen durchströmen da es dabei zu hohen Druckdifferenzen kommen kann. Hierbei ist sichergestellt, dass durch diesen ständigen osmotischen Druckausgleich die Zwischenräume der Filterkugelplatten nicht verblocken.

Der Emulgatorfilter 1 weist weiterhin ein Abspülventil 13 und ein Spülflüssigkeitszulauf 14 auf.

Die Emulsion fließt durch den Siebboden 25 aus dem Emulgatorfilter 1 und wird durch die Saug-Druckpumpe 27 vom Ablauf 26 über den Zulauf 33 in den Adhäsionsfilter 2 mit Drucküberwachung 34 und Entlüftung 35 gepumpt. Die Leitung weist ein Schauglas 29 auf. Zuvor wird die Emulsion 5 im Injektor 28 mit der Gas-/Luftversorgung 30 versorgt. Dabei entsteht im Gasemulsionsverteilerraum 36 eine schaumartige Emulsion 5. Mittels Rieselelement 37 wird dann die schaumartige Emulsion 5 auf die darunter angeordnete Filterelemente 38 bevorzugt in Kugelform verteilt, und somit die Emulsion 5 mit Gase 30a, Sauerstoff angereichert. Hierbei wird durch die unterschiedliche Adhäsionwirkung 38a der Emulsion 5 und der Öle/Fette die Phasen getrennt, so dass sich aus den Ölen/Fetten die Gasblasen bilden, die dann auf den Polyamid Kugeln zusammenlaufen und durch die Schwerkraft durch den Siebboden 25 und dann auf die Niveau-Oberfläche 41a tropfen. Durch die unterschiedliche Dichte zwischen der Emulsion 5 (etwa 0,98 kg / dm³) und der Öle / Fette (etwa 0,85 kg / dm³) schwimmen die leichteren Öle/Fette- Gasblasen als Öl-Fettschaum unterhalb des Siebbodens 25 auf der Niveauoberfläche 41a der Emulsion 5.

Die überschüssigen Gas 30a und der Öl / Fettschaum trennen sich unterhalb des Siebbodens 25 von der Emulsion 5, so dass die angereicherte Emulsion 5 am Boden des Adhäsionsfilters 2 den Behälter verlässt. Das überschüssige, verbrauchte Gas 30a strömt mit dem Öl-Fettschaum mittels Öl-Fett/Abluftverbindung 40a in den automatischen Entlüfter 39. Beim Überströmen der Gase 30a aus dem Adhäsionsfilters 2 in den automatischen Entlüfter 39 wird der sich auf der Niveauoberfläche ansammelnden Öl-Fettschaum durch das Platzen der Blasen aufgetrennt, so dass die überschüssigen Gase 30a aus dem automatischen Entlüfter 39 als Abluft 40 abgeführt werden. Dabei bildet sich eine Öl-Fettschicht, die dann über die ÖlAbscheideverbindungsleitung 39c in das Öl-Sammelgefäß 39d mit Entlüfter 39b einströmt. Durch die unterschiedliche Dichte zwischen der Emulsion 5 und dem Öl/Fett entsteht eine Unter-Überströmung, so dass beim Einströmen der leichteren Öle-Fette die schwerere Emulsion 5 aus dem Öl-Sammelgefäß 39d in den automatischen Entlüfter 39 rückströmt und diese dann über den Niveauausgleich 41 verlässt. Das mit Gasen 30a angereicherte Öl-Fett trennt sich im Kopfraum des Öl-Sammelgefäß 39d, so dass der Gasüberschuss über die Belüftung 39e abgeführt wird. Die sich nach unten aufstauende Öl-Fettschicht wird mittels geeigneter Messtechnik (z.B. Detektor 39a mit einem elektromagnetischen Wechselfeld zur Unterscheidung der dielektrischen Eigenschaften) gemessen. So können die Öle/Fette von der Emulsion 5 unterschieden werden, so dass ein manuelles oder automatisches Ausschleusen der Öle/Fette ermöglicht wird.

Die gasangereicherte Emulsion 5 verlässt am Boden des Adhäsionsfilters 2 den Behälter und strömt dann ohne Gasblasen von unten über den Zulauf 42 in den Kapillarfilter 3. In dem Kapillarfilter 3-Behälter sind die gleichen diffusionsfähigen Filterelemente 38, wie bereits in den ersten beiden Filtern beschrieben, eingesetzt. Hierbei strömt die angereicherte Emulsion 5 entgegen der Schwerkraft über die Filterelemente 38, so dass es dabei zur kapillaren Rückhaltung der restlichen Öle/Fette zwischen den Hohlräumen der Filterplatten kommen kann. Die gereinigte Emulsion 5 fließt dann im Kopfraum des Kapillarfilters 3 aus diesem als Rücklauf 44 heraus, so dass mittels Rohr- oder Schlauchverbindung mit Temperaturüberwachung 43 diese in die Emulsions-Wanne/Behälter 4 zurückgeführt wird. Hierbei entsteht in der EmulsionsWanne/Behältnis 4 eine Querströmung, so dass die Emulsion 5 erneut zum Kühlen und Schmieren des Werkstücks und Werkzeugs eingesetzt wird.

Im Bedarfsfall kann die Reinigung der Emulsion 5 von der Emulsions-Wanne/Behälter 4 unterbrochen werden. Dann kann der Emulsionsstrom zwischen dem Ausgang des Kapillarfilters 3 und dem Eingang des Emulgatorfilters 1 im Bypass 46 kurzgeschlossen werden. Somit kann eine angepasste Gas/Luftversorgung 30 der Bakterien durch den Durchflussregler 31 mit Rückflussverhinderer 32 und über den Injektor 28 gewährleistet werden.

Die Emulsion 5 fließt entgegen der Schwerkraft von Behälterboden nach oben im Kopfraum des Kapillarfilters 3. Dabei entspannen sich die gepufferten Gase 30a aus der Emulsion 5 da der Druckwiederstand im Kapillarfilter 3 geringer ist als im Adhäsionsfilter 2. Diese Gasentspannung kann mittels Sauerstoff-Sensor SS ermittelt werden da dieser in seiner Einstellung die Sättigungsgrenze der Flüssigkeit, der Emulsion 5 anzeigt. Z.B. Süßwasser kann bei 20 °C Normaldruck 1013 mbar etwa 9,1 mg/I an Sauerstoff puffern, das sind dann 100 % Sättigung. Im Überdruck von etwa 100 mbar (1113 mbar) sind das dann etwa 10 mg/I und folglich 110 % Sättigung. Dieser Druck entspannt sich beim Aufwärtsstrom im Kapillarfilter 3, da die statische Flüssigkeitssäule nach oben im Kapillarfilter 5 abnimmt. Durch die Druckreduktion entspannen die gepufferten Gase 30a und erzeugen dabei kleine Gasbläschen die dann auf Ihre Oberfläche Rest-Öle und Fette aufnehmen, die nicht im Adhäsionsfilter 2 und dann im automatischen Entlüfter 39 und im Öl-Sammelbehälter 39d zurückgehalten wurden. Eine Leitwertsonde LS, die ebenso im Kopfraum des Kapillarfilter eingebaut ist misst den Salzgehalt der Emulsion 5. Gemessen wird dabei in µS/cm. Dieser Wert ist bei destilliertem Wasser 0 µS/cm da folglich keine Salze vorhanden sind. Bei häuslichem Leitungswasser liegt der Wert bei etwa 400 bis 700 µS/cm. Bei einer Emulsion kann dieser Wert auch weit höher sein, da es durch die Verdunstung des Wassers aus der Emulsion und durch den Schmutzeintrag bei der Bearbeitung auch weit über 1000 µS/cm sein kann. Eine Leitwertsonde funktioniert nach dem Prinzip des Widerstands. Dabei wir eine elektrische Spannung zwischen zwei z.B.

Edelstahlelektroden angelegt, so dass wenige Millivolt an der Plus-Elektrode mittels Flüssigkeits-Widerstand der Emulsion in Abhängigkeit der Temperatur an der zweiten Minuselektrode gemessen wird. Hierbei hat sich gezeigt, dass in Flüssigkeiten ohne Öl-Fettfilm 6 ein nahezu stabiler Wert angezeigt wird. Strömen mit Öl oder Fette beladene Gasblasen über die Elektroden, so wird zeitweise der Kontakt zwischen der Flüssigkeit und der Elektrode verringert und somit auch der gemessene und angezeigte Leitwert durch die Öl-Fettanhaftungen. Dabei kann es zu Messwert-Schwankungen von mehreren 100 µS/cm, ja sogar mehreren 1000 µS/cm kommen. Diese Schwankungen stabilisieren sich je geringer der Öl-Fettschaum in der Emulsion 5 ist. Dieser Sachverhalt kann daher als Indikator und als Stell- und Regelgröße für eine gereinigte Emulsion 5 verwendet werden und kann daher zur Steuerung des Druckwiderstands, der Emulsionsströmung und zur Gasanreicherung verwendet werden.

Fig. 4 zeigt ein bevorzugtes Filterelement 132 für eine erfindungsgemäße Filteranlage. Das Filterelement 132 hat eine Kugelform 136 und besteht aus Polyamid. Entsprechende Filterelemente sind in der DE 10 2009 043 110 A1 und der WO 2014/198867 A2 genauer beschrieben.

Figur 5 zeigten einen bevorzugten Aufbau einer erfindungsgemäßen Filteranlage 1000.

Der Aufbau und die Funktionsweise basieren auf der Filteranlage nach Fig. 1, weisen jedoch folgende erfindungsrelevanten Unterschiede auf:
Die Emulsion 105 wird über den oberen Skimmerzulauf 108 des Skimmers 107 über die Leitung 107a zum tangentialen Zulauf 111 des ersten Filterbehälters 101 geführt.

In einer vorteilhaften Ausführung der Filteranlagen-Einheit 1000 wird ein Dreiwegeventil 128 der Saug-Druck-Umwälzpumpe 127 nachgeschaltet. Der Dreiwegeventil Zulauf 128a kann beim Ansaugen der Emulsion mittels Saug-Druck-Luftpumpe 120 als Ablauf nach rechts 128b gestellt werden. Dadurch wird nur der Emulgatorfilterbehälter 101 und die Saug-Druck-Umwälzpumpe 127 unter Vakuum gesetzt. Die Luftabsaugung und das dabei entstehende Vakuum werden im Volumen stark reduziert, da in den beiden nachgeschalteten Filterbehältern 102, 103 kein Vakuum benötigt wird.

Aus dieser vorteilhaften Ausführung der Erfindung wird die Saug-Druck-Umwälzpumpe 127 gleichzeitig mit dem Einsaugen der Emulsion aus der Maschinenwanne/Behälter 104 mit Emulsion 105 befüllt, so dass diese nicht mehr zusätzlich belüftet werden muss.

In einer weiteren vorteilhaften Ausführung der mechanischen Niveauregulierung 123 wird nicht mehr die belastete Emulsion 105 in die Niveaukammer eingesaugt, sondern eine neutrale und saubere Flüssigkeit. Dabei wird die Flüssigkeit in einem flexiblen Behälter 122, der bevorzugt im Bodenbereich und unterhalb des Auflage-Siebboden 135 positioniert ist, eingelagert.

In dieser vorteilhaften Ausführung der mechanischen Niveauregulierung 123 ist der Membran-Ausgleichsbehälter 122 aus einer HDPE Folie zusammengeschweißt. Die Folie besteht aus einem z.B. Stück in rechteckiger Ausführung. In der Diagonalen wird ein Loch eingestanzt. Hier wird ein fester Übergang in das Loch eingesteckt und von der Gegenseite der Folie mittels Schraub-Dichtelement fixiert und abgedichtet. Die Folie wird dann auf drei Seiten ab geschweißt. Der Membran-Ausgleichsbehälter 122 wird dann bevorzugt mittels Außengewinde in die Muffe des Standrohrs 123 von der mechanischen Niveauregulierung eingeschraubt und dabei abgedichtet.

In einer vorteilhaften Ausführung der mechanischen Niveauregulierung steht vertikal im Achsenzentrum des Emulgatorfilter-Behälters 101 das Standrohr 123, das beginnend etwa 3 mm unterhalb des Behälterdeckels, entgegen der Schwerkraft nach unten mit endender Gewindemuffe, die auf den Auflage-Siebboden 135 geschweißt ist. Hierdurch bilden der Membran-Ausgleichsbehälter 122, der Siebboden 135 und das Standrohr 123 als mechanische Niveauregulierung eine Einheit.

Um die Gase aus dem Kopfraum des Emulgatorfilter-Behälters 101 zu entfernen und dabei sicherzustellen, dass die Niveauoberfläche gleichbleibend ist, werden die Gase unterhalb des Deckels in das zentrisch angeordnete Gas-Überstromrohr 124 abgeführt. Das im Durchmesser kleinere Gas-Überstromrohr 124 ist im Deckel befestigt und abgedichtet. Dieser führt in seiner Länge auf die Niveauoberfläche wie die der Emulsion, so dass die überschüssigen Gase beim Unterschreiten der Emulsions-Niveaus in das Gas-Überstromrohr einströmen.

In einer weiteren vorteilhaften Ausführung der mechanischen Niveauregulierung verhält sich der Füllstand in der Niveauregulierungs-Flüssigkeit 125 etwa gleich wie der Füllstand der Emulsion um die mechanische Niveauregulierung. Hierbei muss die Emulsion einen statischen Druck auf den Membran-Ausgleichsbehälter 122, bevorzugt aus einer HDPE Folie, erzeugen. Der Füllstand im Standrohr 123 der mechanischen Niveauregulierung ist etwas niedriger, da der statische Druck der Emulsion den Membran-Ausgleichsbehälter 122 verformen muss. Je nach Steifigkeit des Membran-Ausgleichsbehälters 122 verringert sich der Füllstand der Niveauregulierungs-Flüssigkeit 125 im Standrohr 123. Die Niveauunterschiede können je nach Steifigkeit etwa 1 bis 20 cm sein. Bei einem Membran-Ausgleichsbehälter 122 aus einer 100 µm HDPE Folie sind das etwa 2 cm Füllstands-Widerstand. Um das Niveau auszugleichen, muss das Gas-Überstromrohr 124 hierbei etwa 2 cm länger sein als die gewünschte Emulsions-Oberfläche, die im Bereich von den Tangential-Zulauf 111 ist.

In einer weiteren vorteilhaften Ausführung wird in der Verlängerung des Gas-Überstromrohrs 124 und zugleich außerhalb des Emulgatorfilter-Behälters 101 und auf dem Deckel ein automatischer Schwimmer-Entlüfter 113 positioniert. Mittels Saug-Druck-Luftpumpe 120 werden die Luft-Gase aus dem Gasraum 115 abgesaugt, so dass die Niveauregulierungs-Flüssigkeit 125 dann in dem automatischen Schwimmer-Entlüfter 113 einströmt und den Schwimmer mit Ventilstift anhebt, der den Gas-Luft-Abstrom zur Saug-Druck-Luftpumpe 120 verschließt. Da die Druckverhältnisse im Prozess um und auf den Membran-Ausgleichsbehälter 122 nur sehr geringen Schwankungen unterliegen, kann das stetig anfallende überschüssige Gas permanent ausgeschleust werden. Die Niveau-Änderungen der Emulsion betragen dabei nur wenige mm. Somit kann eine Beschädigung des Membran-Ausgleichsbehälters 122 durch ein erhöhtes Biegeverhalten ausgeschlossen werden.

Ein weiterer Vorteil der Niveauregulierung des Emulsions-Füllstands in dem Emulgatorfilter-Behälter 101 ist die automatische Gas/Luft-Regulierung 117. Hierdurch werden mittels Saug-Druck-Luftpumpe 120 die überschüssigen Gase aus dem automatischen Schwimmer-Entlüfter 113 und gleichzeitig Frischluft über das Belüftungsventil 121 in den zweiten Filterbehälter 102 gefördert.

Bei Inbetriebnahme der Filteranlage 1000 wird die Emulsion 105 aus der Emulsions-WanneBehälter 104 in den Emulgatorfilter-Behälter 101 eingesaugt. Hierbei entsteht ein Vakuum und somit ein statischer Unterdruck in Abhängigkeit von der Saughöhe/Widerstand 109. Bei zum Beispiel 1 m Ansaughöhe muss die Saug-Druck-Luftpumpe 120 einen Unterdruck von 100 mbar erzeugen. Damit die Saug-Druck-Luftpumpe 120 keine Frischluft über den ZuluftAnsaugfilter 118 ansaugt, ist ein mechanisches und federbelastetes Regelventil 119 als automatische Gas/Luft-Regelung 117 zwischengeschaltet. Die Voreistellung der automatischen Gas/Luft-Regelung 117 und somit der Öffnung des Ventils ist auf > 100 mbar voreingestellt. Damit ein Unterdruck-Überschuss sichergestellt ist, wird der Widerstand der automatischen Gas/Luft-Regelung 117 auf 150 mbar voreingestellt. Die Saug-Druck-Luftpumpe 120 fördert dann ein Luft-Gasgemisch über das Belüftungsventil in den nachgeschalteten Oxidationsfilter-Behälter 102.

Damit ein automatischer Betrieb der Filteranlage möglich ist, wird bei Betriebsstart der sich verändernde Unterdruck im Emulgatorfilter-Behälter 101 gemessen. Mittels Vakuummeter 112 kann je nach Füllstand der Emulsion 105 der zunehmende Unterdruck gemessen werden. Mittels Computer-Steuerung kann ein Stagnieren des Unterdrucks für eine Weiterschaltung vorgenommen werden. Ein sich nicht mehr verändernder Unterdruck, z.B. von 100 mbar signalisiert die Vollfüllung des Emulgatorfilter-Behälters 101. Die Saug-Druck-Umwälzpumpe 127 wird automatisch zugeschaltet und die Emulsion 105 wird im Bypass vom Dreiwegeventil 128 Zulauf von unten 128a im Ausgang vom Dreiwegeventil Ablauf nach rechts 128b in den Emulgatorfilter-Behälter 101 zirkuliert. Dabei können Luftüberschüsse über den Gasraum 115 abgeführt werden. Bei einer stabilen Umwälzung der Emulsion 105 kann anhand der Druck-Vakuum-Veränderungen oder der Pumpen-Daten Auslesung, oder aber nur nach einer zeitlichen Schrittkette das Umschalten des Dreiwegeventils 128 von Rechtsstellung 128b auf Dreiwegeventil Ablauf nach links 128c umgeschaltet werden.

Nachdem das Dreiwegeventil 128 auf links umgeschaltet hat, fördert die Saug-Druck-Umwälzpumpe 127 die Emulsion in den Kopfraum des Oxidationsfilter-Behälters 102. Hier vermischen sich dann die Luft und die Emulsion. Der Luftüberschuss wird dann über den automatischen Entlüfter 130 als Abluft 129 ausgeschleust. Seitlich und oberhalb des Oxidationsfilter-Behälters 102 fließt dann die Emulsion 105 in den nachgeschalteten Reaktionsfilter-Behälter 103 und verlässt diesen dann im Kopfraum nach links.

In einer weiteren vorteilhaften Ausführung der Erfindung wird der Druck mittels Manometer 114 im Kopfraum des Oxidationsfilter-Behälters 102 gemessen. Mittels Computer-Steuerung können dabei die sich durch den Prozess veränderbaren Widerstände detektiert und ausgewertet werden.

Durch eine vorteilhafte Anordnung des Behälterauslauf-Stutzen vom Emulgatorfilter-Behälter 101 als horizontaler und seitlicher Behälterauslauf 126 wird gegenüber einer Bodenabsaugung eine Trombenbildung verhindert. Das bewirkt zusätzlich eine gleichmäßige Umwälzung der Emulsion 105 und schafft den Platz für den Membran-Ausgleichsbehälter 122.

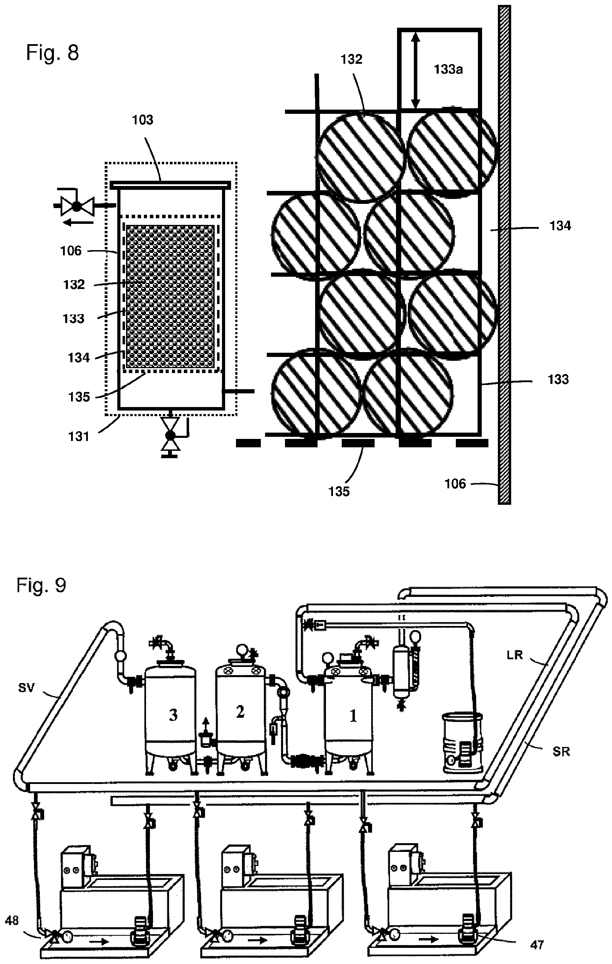

In einer weiteren vorteilhaften Ausführung der Erfindung werden die Filterelemente 132 in einen Siebzylinder 133 eingesetzt. Dies ist im Detail auch in Fig. 8 gezeigt. Damit der Siebzylinder 133 in den jeweiligen Filterbehälter 101, 102, 103 als Einheit 131 eingesetzt werden kann, benötigt es zwischen dem Siebzylinder 133 und dem Behälterinnenwand 106 einen Luftraum. Der Luftraum 134 zwischen Siebzylinder und Behälterinnenwand darf nicht zu groß werden, da es sonst zu einer Kanalablaufströmung der Emulsion 105 kommen kann. Um das zu vermeiden ist die Siebmaschenweite etwa 20 % kleiner als der Durchmesser der kugelförmigen Filterelemente 132.

Ein Filterelement 132 kann beispielsweise einen Durchmesser von 12 mm haben. Der Siebzylinder 133 hat dann bevorzugt eine Sieb-Maschenweite 133a von 10 x 10 mm. Das ermöglicht eine Kugeldurchsicht von etwa 2,7 mm. Das bedeutet bei einem Behälter 101, 102, 103 ein Innendurchmesser von 150 mm. Der Siebzylinder kann einen Außendurchmesser von 145 mm haben. Der Luftraum 134 zwischen Siebzylinder 133 und Behälterinnenwand 106 ermöglicht somit einen widerstandsfreien Ein- und Ausbau bei der Wartung.

In einer weiteren vorteilhaften Ausführung des Siebzylinders 133 wird der Siebboden 135 mit dem Siebzylinder 133 verschweißt, so dass sich ein Korb ergibt und die Filterelemente 132 bei der Wartung auf einmal entnommen werden können.

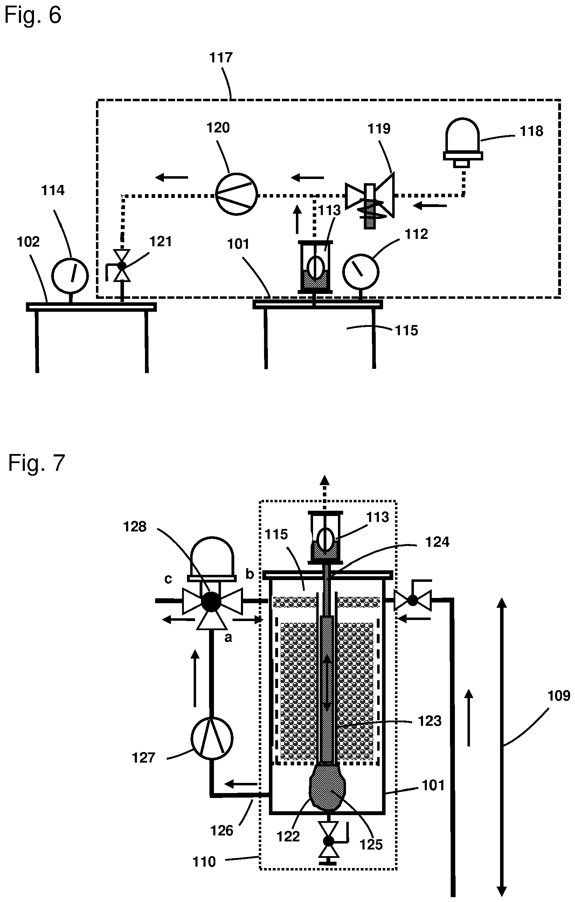

Figur 6 zeigt die automatische Gasluft-Regulierung 117 aus Figur 5 als vergrößerten Ausschnitt. Zu sehen sind die oberen Abschnitte des ersten Filterbehälters 101 und des zweiten Filterbehälters 102 mit dem Gasraum 115, dem Vakuummeter 112, dem automatischen Schwimmerentlüfter 113, dem Zuluftansaugfilter 118, dem Unterdruckregler 119, der Saugdruckluftpumpe 120, dem Belüftungsventil 121 und dem Manometer 114.

Figur 7 zeigt einen vergrößerten Ausschnitt der Niveauregulierungseinheit 110 im ersten Filterbehälter 101 aus Figur 5. Zu sehen ist wieder die Saughöhe 109, der Ausgleichsbehälter 122 mit dem Standrohr 123, in denen sich die Niveauregulierungsflüssigkeit 125 befindet sowie das Gasüberstromrohr 124, durch das das Gas aus dem Gasraum 115 in den automatischen Schwimmerentlüfter 113 geleitet werden kann. Die Emulsion wird aus dem seitlichen Behälterablauf 126 über die Umwälzpumpe 127 zu dem Dreiwegeventil 128 mit dem Zulauf a und den beiden Abläufen b und c geleitet.

Figur 8 zeigt einen vergrößerten Ausschnitt des Aufbaus 131 eines Siebeinsatzes, hier im dritten Filterbehälter 103 mit der Innenwand 106. Der Siebeinsatz besteht aus einem Siebzylinder 133 und dem Siebboden 135. In dem Siebeinsatz befindet sich eine Vielzahl von kugelförmigen Filterelementen 132. Der Siebzylinder 133 hat eine Maschenweite 133a mit einer Größe, die es erlaubt, dass die Filterelemente 132 aus dem Siebzylinder 133 herausragen, so dass der Luftraum 134 zwischen Siebzylinder 133 und Behälterinnenwand 106 auch durch Filterelemente 132 ausgefüllt wird.

Wie Fig. 9 zeigt, kann die Filteranlage auch zum Aufbereiten von Emulsionen aus mehreren Bearbeitungsmaschinen eingesetzt werden. Die Emulsionen aus den einzelnen Emulsions-Wannen/Behältern 4 werden dabei bevorzugt mittels Tauchpumpen 47 einer Sammelvorlaufleitung SV zugeführt und gelangen von dort zum Emulgatorfilter 1. Der Rücklauf geschieht über eine Sammelrücklaufleitung SR, von der einzelne Leitungen LR über die Schwimmerventile 48 in die einzelnen Emulsions-Wannen/Behälter 4 der jeweiligen Maschine führen. Dieser Aufbau ist erfindungsgemäß auch für die erfindungsgemäße Filteranlage wie in Figur 5 gezeigt möglich.

### Bezugszeichenliste

- 1: Emulgatorfilter
- 2: Adhäsionsfilter
- 3: Kapillarfilter
- 4: Emulsions-Wanne/ Behälter
- 5: Emulsion
- 6: Öl-Fettfilm
- 7: Skimmer
- 8: Skimmer Zulauf oben
- 9: Skimmer Zulauf unten
- 10: Schwimmkörper
- 11: Skimmerablauf
- 12: Tangential-Zulauf
- 13: Abspülventil
- 14: Spülflüssigkeit Zulauf
- 15: Mechanische-Niveauregulierung
- 16: Gasraum
- 17: Automatische Niveauregulierung
- 18: Filterelemente < 1 kg / dm³
- 19: Emulsionsraum
- 20: Rotationsströmung
- 21: Filterelement-Kollision
- 24: Filterelemente > 1 kg / dm3
- 25: Siebboden
- 26: Ablauf- Emulgatorfilter
- 27: Saug-Druckpumpe
- 28: Injektor
- 29: Schauglas
- 30: Gas-/Luftversorgung
- 30a: Gase
- 31: Durchflussregler
- 32: Rückflussverhinderer
- 33: Zulauf- Adhäsionsfilter
- 34: Drucküberwachung
- 35: Entlüftung
- 36: Gasemulsionsverteilerraum
- 37: Rieselelement
- 38: Filterelemente
- 39: Automatischer- Entlüfter
- 39a: Detektor (Öl/Wasser/Emulsion)
- 39b: Ablauf (Öl/Wasser/Emulsion)
- 39c: Öl- Abscheideverbindungsleitung
- 39d: Öl- Sammelgefäß
- 39e: Belüftung
- 40: Abluft
- 40a: Öl- Fettschaum/Abluftverbindung
- 41: Niveauausgleich
- 41a: Niveauoberfläche (Öl/ Wasser / Emulsion)
- 41b: Öl- Fettschaum
- 42: Zulauf Kapillarfilter
- 43: Temperaturüberwachung
- 44: Rücklauf
- 46: Bypass
- 47: Tauchpumpe
- 48: Automatisches Schwimmerventil
- 101: Emulgatorfilter-Behälter
- 102: Oxydationsfilter-Behälter
- 103: Reaktionsfilter-Behälter
- 104: Emulsions-Wanne/Behälter
- 105: Emulsion
- 106: Behälter-Innenwand
- 107: Skimmer
- 107a: Leitung
- 108: Skimmer Zulauf oben
- 109: Saughöhe/Widerstand
- 110: Niveau-Regulierungs-Einheit
- 111: Tangential-Zulauf
- 112: Vakuummeter
- 113: Automatischer Schwimmer-Entlüfter
- 114: Manometer
- 115: Gasraum
- 116: Emulsionsraum
- 117: Automatische Gas/Luft-Regulierung
- 118: Zuluft Ansaugfilter
- 119: Unterdruck-Regler
- 120: Saug-Druck-Luftpumpe
- 121: Belüftungsventil
- 122: Membran-Ausgleichsbehälter
- 123: Standrohr der mechanischen Niveauregulierung
- 124: Gas-Überstromrohr
- 125: Niveauregulierungs-Flüssigkeit
- 126: Seitlicher Behälterablauf
- 127: Saug-Druck-Umwälzpumpe
- 128: Dreiwegeventil
- 128a: Dreiwegeventil Zulauf von unten
- 128b: Dreiwegeventil Ablauf nach rechts
- 128c: Dreiwegeventil Ablauf nach links
- 129: Entlüftung
- 130: Automatischer-Entlüfter
- 131: Aufbau Siebeinsatz im Behälter
- 132: Filterelemente
- 133: Siebzylinder
- 133a: Sieb-Maschenweite
- 134: Luftraum zwischen Siebzylinder und Behälter Innenwand
- 135: Siebboden
- 136: Kugelform
- 1000: Filteranlage
- LS: Leitwert- Sonde (Messwert in pS/cm)
- SS: Sauerstoff- Sonde (Messwert in % Sättigung der Emulsion in Abhängigkeit der Temperatur)
- SV: Sammelvorlaufleitung
- SR: Sammelrücklaufleitung

## Patentansprüche

1. Filteranlage (1000) zum Entfernen und/oder Neutralisieren von ungelösten Ölen und Fetten auf/in wasserhaltigen Emulsionen aus insbesondere Behältern und Wannen die zur Vorhaltung und Lagerung von Emulsionen verwendet werden, die zur Kühlung und Schmierung von Werkstücken und Werkzeugen bei der Bearbeitung eingesetzt werden, mit wenigstens
- einer Vorrichtung zur Absaugung der Emulsion (105) aus der Emulsions-Wanne/ Behälter (104), bevorzugt mittels Skimmer (107),
- einer Leitung (107a) von der Vorrichtung (107) zu einem Zulauf (111) eines ersten Filter-Behälters (101),
- einem, bevorzugt seitlich angeordneten, Ablauf (126) aus dem ersten Filter-Behälters (101),
- einer mit dem Ablauf (126) verbundene Pumpe (127),
- einem zweiten Filterbehälter (102) mit einem Belüftungsventil (121),
- einem dritten Filterbehälter (103), der über eine Leitung mit dem zweiten Filterbehälter (102) verbunden ist,
**dadurch gekennzeichnet, dass** die Filteranlage ein Dreiwegeventil (128) aufweist, wobei der Zulauf (128a) des Dreiwegeventils (128) mit der Pumpe (127) verbunden ist, der erste Dreiwegeablauf (128b) mit dem ersten Filter-Behälter (101) verbunden ist und der zweite Dreiwegeablauf (128c) mit dem zweiten Filterbehälter (102) verbunden ist.

2. Filteranlage nach Anspruch 1, wobei der erste Filterbehälter (101), bevorzugt auch der zweite Filterbehälter (102) und/oder der dritte Filterbehälter (103) jeweils eine Vielzahl von kugelförmigen Filterelementen (132) aufweist.

3. Filteranlage, nach einem der vorhergehenden Ansprüche, **dadurch gekennzeichnet, dass** der ersten Filter-Behälter (101) eine Niveau-Regulierungs-Einheit (110) aufweist, die ein senkrecht verlaufendes Rohr (123) und ein am unteren offenen Ende des Rohrs (123) befestigten flexiblen Behälter (122) aufweist, wobei sich im Behälter (122) und im Rohr (123) eine Flüssigkeit (125) befindet.

4. Filteranlage nach einem der vorhergehenden Ansprüche, **dadurch gekennzeichnet, dass** der erste Filter-Behälter (101) im oberen Bereich ein Gas-Überstromrohr (124) aufweist, das an eine Pumpe (120) angeschlossen ist, die mit dem zweiten Filter-Behälter (102) verbunden ist.

5. Filteranlage nach einem der Ansprüche 3 oder 4, **dadurch gekennzeichnet, dass** das senkrecht verlaufende Rohr (123) nach oben hin offen ist und das Gas-Überstromrohr (124) mit seinem unteren Ende in das senkrecht verlaufende Rohr (123) hineinreicht, wobei das Gas-Überstromrohr (124) einen kleineren Durchmesser hat als das senkrecht verlaufende Rohr (123), so dass Gas in die obere Öffnung des senkrecht verlaufenden Rohrs (123) eindringen kann.

6. Filteranlage nach einem der vorhergehenden Ansprüche, **dadurch gekennzeichnet, dass** der ersten Filter-Behälter (101) ein Vakuummeter (112) aufweist.

7. Filteranlage nach einem der vorhergehenden Ansprüche, **dadurch gekennzeichnet, dass** der zweite Filter-Behälter (102) ein Manometer (114) aufweist.

8. Filteranlage nach einem der vorhergehenden Ansprüche, **dadurch gekennzeichnet, dass** das Dreiwegeventil (128), die Pumpe (127), die Pumpe (120), das Vakuummeter (112) und das Manometer (114) mit einem Computer zur Steuerung der Filteranlage verbunden sind.

9. Filteranlage nach einem der vorhergehenden Ansprüche, **dadurch gekennzeichnet, dass** der erste Filterbehälter (101) und/oder der zweite Filterbehälter (102) und/oder der dritte Filterbehälter (103) jeweils einen herausnehmbaren Siebeinsatz (131) aufweist, in dem sich eine Vielzahl von kugelförmigen Filterelementen (132) befindet.

10. Filteranlage nach Anspruch 9, **dadurch gekennzeichnet, dass** der Siebeinsatz (131) aus einem seitlichen Siebgitter (133) und einem Siebboden (135) gebildet wird.

11. Filteranlage nach Anspruch 9 oder Anspruch 10, **dadurch gekennzeichnet, dass** das seitliche Siebgitter (133) des Siebeinsatzes (131) eine Siebmaschenweite (133a) aufweist, die mindestens 10% und höchstens 30% kleiner ist als der Durchmesser der kugelförmigen Filterelemente (132), bevorzugt etwa 20% kleiner ist als der Durchmesser der kugelförmigen Filterelemente (132).

12. Filteranlage nach einem der vorhergehenden Ansprüche, **dadurch gekennzeichnet, dass** der ersten Filter-Behälter (101) eine Niveau-Regulierungs-Einheit (110) aufweist, die ein senkrecht verlaufendes Rohr (123) und ein am unteren offenen Ende des Rohrs (123) befestigten flexiblen Behälter (122) aufweist, wobei sich im Behälter (122) und im Rohr (123) eine Flüssigkeit (125) befindet.

13. Filteranlage nach einem der vorherigen Ansprüche, wobei im ersten Filterbehälter (101) schwimmende Filterelemente (132) mit einer Dichte von kleiner als 1 kg/dm³ vorgesehen sind.

14. Filteranlage nach einem der vorherigen Ansprüche, wobei die Filterelemente (132) aus einem diffusionsfähigen Kunststoff, insbesondere Polyamid, gebildet sind, wobei die Filterelemente (132) bevorzugt aus Polyamid bestehen oder überwiegend Polyamid enthalten.

15. Filteranlage nach einem der vorherigen Ansprüche, wobei die Filterelemente (132) aus Filterplatten, insbesondere mit Kapillarwirkung, ausgeführt sind.

## Claims

1. Filter system (1000) for removing and/or neutralizing undissolved oils and greases on/in emulsions containing water from, in particular, containers and tubs which are used for holding and storing emulsions which are used for cooling and lubricating workpieces and tools during machining, with at least
- a device for sucking off the emulsion (105) from the emulsion tub/container (104), preferably by means of a skimmer (107),
- a line (107a) from the device (107) to an inlet (111) of a first filter container (101),
- an outlet (126) from the first filter container (101), preferably arranged laterally,
- a pump (127) connected to the outlet (126),
- a second filter container (102) with a venting valve (121),
- a third filter container (103) connected to the second filter container (102) by a line,
**characterised in that** the filter system has a three-way valve (128), wherein the inlet (128a) of the three-way valve (128) is connected to the pump (127), the first three-way outlet (128b) is connected to the first filter container (101) and the second three-way outlet (128c) is connected to the second filter container (102).

2. The filter system according to claim 1, wherein the first filter container (101), preferably also the second filter container (102) and/or the third filter container (103) each has a plurality of spherical filter elements (132).

3. The filter system according to one of the preceding claims, **characterised in that** the first filter container (101) has a level regulating unit (110) which has a vertically extending pipe (123) and a flexible container (122) attached to the lower open end of the pipe (123), wherein a liquid (125) is located in the container (122) and in the pipe (123).

4. The filter system according to one of the preceding claims, **characterised in that** the first filter container (101) has a gas overflow pipe (124) in the upper region which is coupled to a pump (120) which is connected to the second filter container (102).

5. The filter system according to one of the claims 3 or 4, **characterised in that** the vertically extending pipe (123) is open at the top and the gas overflow pipe (124) extends with its lower end into the vertically extending pipe (123), wherein the gas overflow pipe (124) has a smaller diameter than the vertically extending pipe (123), so that gas can enter the upper opening of the vertically extending pipe (123).

6. The filter system according to one of the preceding claims, **characterised in that** the first filter container (101) has a vacuum meter (112).

7. The filter system according to one of the preceding claims, **characterised in that** the second filter container (102) has a manometer (114).

8. The filter system according to one of the preceding claims, **characterised in that** the three-way valve (128), the pump (127), the pump (120), the vacuum meter (112) and the manometer (114) are connected to a computer for controlling the filter system.

9. The filter system according to one of the preceding claims, **characterised in that** the first filter container (101) and/or the second filter container (102) and/or the third filter container (103) each has a removable sieve insert (131) in which a plurality of spherical filter elements (132) are located.

10. The filter system according to claim 9, **characterised in that** the sieve insert (131) is formed by a lateral sieve grid (133) and a sieve bottom (135).

11. The filter system according to claim 9 or claim 10, **characterised in that** the lateral sieve grid (133) of the sieve insert (131) has a sieve mesh width (133a) which is at least 10% and at most 30% smaller than the diameter of the spherical filter elements (132), preferably about 20% smaller than the diameter of the spherical filter elements (132).

12. The filter system according to one of the preceding claims, **characterised in that** the first filter container (101) has a level regulating unit (110) which has a vertically extending pipe (123) and a flexible container (122) attached to the lower open end of the pipe (123), wherein a liquid (125) is located in the container (122) and in the pipe (123).

13. The filter system according to one of the preceding claims, wherein floating filter elements (132) with a density of less than 1 kg/dm³ are provided in the first filter container (101).

14. The filter system according to one of the preceding claims, wherein the filter elements (132) are formed from a diffusible plastic, in particular polyamide, wherein the filter elements (132) preferably consist of polyamide or predominantly contain polyamide.

15. The filter system according to one of the preceding claims, wherein the filter elements (132) are made of filter plates, in particular with capillary action.

## Revendications

1. Un système de filtre (1000) pour éliminer et/ou neutraliser des huiles et des graisses non dissous sur/dans des émulsions contenant de l'eau provenant, en particulier, de conteneurs et de bacs qui sont utilisés pour maintenir et stocker des émulsions qui sont utilisées pour refroidir et lubrifier des pièces à usiner et des outils pendant l'usinage, avec au moins
- un dispositif d'aspiration de l'émulsion (105) du bac/conteneur d'émulsion (104), préférablement au moyen d'un écumoire (107),
- une conduite (107a) allant du dispositif (107) à une entrée (111) d'un premier conteneur de filtration (101),
- une sortie (126) du premier conteneur de filtration (101), préférablement disposée latéralement,
- une pompe (127) connectée à la sortie (126),
- un deuxième conteneur de filtration (102) avec une valve de ventilation (121),
- un troisième conteneur de filtration (103) connecté au deuxième conteneur de filtration (102) par une conduite,
**caractérisé en ce que** le système de filtre a une valve à trois voies (128), dans laquelle l'entrée (128a) de la valve à trois voies (128) est connectée à la pompe (127), la première sortie à trois voies (128b) est connectée au premier conteneur de filtration (101) et la deuxième sortie à trois voies (128c) est connectée au deuxième conteneur de filtration (102).

2. Le système de filtre selon la revendication 1, dans lequel le premier conteneur de filtration (101), préférablement aussi le deuxième conteneur de filtration (102) et/ou le troisième conteneur de filtration (103) ont chacun une pluralité d'éléments de filtration sphériques (132).

3. Le système de filtre selon l'une des revendications précédentes, **caractérisé en ce que** le premier conteneur de filtration (101) a une unité de régulation de niveau (110) qui a un tuyau s'étendant verticalement (123) et un conteneur flexible (122) fixé à l'extrémité ouverte inférieure du tuyau (123), dans lequel un liquide (125) est situé dans le conteneur (122) et dans le tuyau (123).

4. Le système de filtre selon l'une des revendications précédentes, **caractérisé en ce que** le premier conteneur de filtration (101) a un tuyau de débordement de gaz (124) dans la région supérieure qui est couplé à une pompe (120) qui est connectée au deuxième conteneur de filtration (102).

5. Le système de filtre selon l'une des revendications 3 ou 4, **caractérisé en ce que** le tuyau s'étendant verticalement (123) est ouvert en haut et le tuyau de débordement de gaz (124) s'étend avec son extrémité inférieure dans le tuyau s'étendant verticalement (123), dans lequel le tuyau de débordement de gaz (124) a un diamètre inférieur à celui du tuyau s'étendant verticalement (123), de manière à ce que le gaz puisse pénétrer dans l'ouverture supérieure du tuyau s'étendant verticalement (123).

6. Le système de filtre selon l'une des revendications précédentes, **caractérisé en ce que** le premier conteneur de filtration (101) a un vacuomètre (112).

7. Le système de filtre selon l'une des revendications précédentes, **caractérisé en ce que** le second conteneur de filtration (102) a un manomètre (114).

8. Le système de filtre selon l'une des revendications précédentes, **caractérisé en ce que** la valve à trois voies (128), la pompe (127), la pompe (120), le vacuomètre (112) et le manomètre (114) sont connectés à un ordinateur pour commander le système de filtre.

9. Le système de filtre selon l'une des revendications précédentes, **caractérisé en ce que** le premier conteneur de filtration (101) et/ou le deuxième conteneur de filtration (102) et/ou le troisième conteneur de filtration (103) ont chacun un insert de tamis détachable (131) dans lequel se trouve une pluralité d'éléments de filtration sphériques (132).

10. Le système de filtre selon la revendication 9, **caractérisé en ce que** l'insert de tamis (131) est formé d'une grille de tamis latéral (133) et d'un fond de tamis (135).

11. Le système de filtre selon la revendication 9 ou la revendication 10, **caractérisé en ce que** la grille de tamis latéral (133) de l'insert de tamis (131) a une largeur de maille de tamis (133a) qui est au moins 10% et au plus 30% inférieure au diamètre des éléments de filtration sphériques (132), préférablement environ 20% inférieure au diamètre des éléments de filtration sphériques (132).

12. Le système de filtre selon l'une des revendications précédentes, **caractérisé en ce que** le premier conteneur de filtration (101) a une unité de régulation de niveau (110) qui a un tuyau s'étendant verticalement (123) et un conteneur flexible (122) fixé à l'extrémité ouverte inférieure du tuyau (123), dans lequel un liquide (125) est situé dans le conteneur (122) et dans le tuyau (123).

13. Le système de filtre selon l'une des revendications précédentes, dans lequel des éléments de filtration flottants (132) d'une densité inférieure à 1 kg/dm³ sont fournis dans le premier conteneur de filtration (101).

14. Le système de filtre selon l'une des revendications précédentes, dans lequel les éléments de filtration (132) sont formés à partir d'un plastique diffusible, en particulier du polyamide, dans lequel les éléments de filtration (132) sont préférablement constitués de polyamide ou contiennent majoritairement du polyamide.

15. Le système de filtre selon l'une des revendications précédentes, dans lequel les éléments de filtration (132) sont constitués de plaques filtrantes, en particulier à capillarité.
